# EUROPÄISCHE PATENTSCHRIFT

(11) **EP 3 629 725 B1**
(45) Veröffentlichungstag und Bekanntmachung des Hinweises auf die Patenterteilung: **31.03.2021**
(21) Anmeldenummer: 17726252.4
(22) Anmeldetag: 23.05.2017
(51) Int. Cl.: A01M 7/00

(54) **STEUEREINRICHTUNG FÜR EINE AUSBRINGVORRICHTUNG UND AUSBRINGVORRICHTUNG MIT EINER STEUEREINRICHTUNG**
CONTROL DEVICE FOR A SPREADER DEVICE, AND SPREADER DEVICE HAVING A CONTROL DEVICE
DISPOSITIF DE COMMANDE POUR UN SYSTÈME D'ÉPANDAGE ET SYSTÈME D'ÉPANDAGE ÉQUIPÉ D'UN TEL DISPOSITIF DE COMMANDE

(43) Veröffentlichungstag der Anmeldung: 08.04.2020
(73) Patentinhaber: FSP Fluid Systems Partners Holding AG, 6340 Baar (CH)
(72) Erfinder: BAUER, Wolfgang, 69469 Weinheim (DE)
(74) Vertreter: Kilchert, Jochen
(86) Internationale Anmeldenummer: PCT/EP2017/062438
(87) Internationale Veröffentlichungsnummer: WO 2018/215058

(56) Entgegenhaltungen:
- EP-A1- 1 167 095
- US-A- 4 288 034
- US-A- 6 119 963
- US-A1- 2005 184 175
- US-A1- 2009 173 802
- US-A1- 2014 196 996
- US-A1- 2014 197 297
- US-B1- 6 293 475

## Beschreibung

Die Erfindung betrifft eine Steuereinrichtung für eine landwirtschaftliche Ausbringvorrichtung, die ein an einem Träger schwenkbar gelagertes Ausbringgestänge aufweist, an dem Ausbringorgane angeordnet sind zum Ausbringen von flüssigen und/oder festen Wirkstoffen, wobei die Steuereinrichtung einen Druckversorgungsanschluss zum Zuführen von unter Druck stehender Hydraulikflüssigkeit und einen Rücklaufanschluss zum Abgeben von Hydraulikflüssigkeit an einen Vorratstank aufweist, und wobei die Steuereinrichtung eine steuerbare Ventilanordnung und eine mit der Ventilanordnung verbundene Hydraulikzylinderanordnung mit einer ersten Zylinderwirkfläche und einer zweiten Zylinderwirkfläche aufweist, wobei die Zylinderwirkflächen jeweils mit einem Hydrospeicher verbunden und mit unter Druck stehender Hydraulikflüssigkeit beaufschlagbar sind, und wobei die Schwenkstellung des Ausbringgestänges durch Änderung des Schaltzustandes der Ventilanordnung veränderbar ist.

Außerdem betrifft die Erfindung eine landwirtschaftliche Ausbringvorrichtung mit einer derartigen Steuereinrichtung.

Zum Ausbringen von flüssigen und/oder festen Wirkstoffen, beispielsweise Pflanzenschutzmitteln, Düngemitteln und dergleichen auf eine zu behandelnde landwirtschaftliche Fläche sind landwirtschaftliche Ausbringvorrichtungen bekannt, die ein an einem Träger schwenkbar gelagertes Ausbringgestänge aufweisen, an dem Ausbringorgane, beispielsweise Spritzdüsen, angeordnet sind. Das Ausbringgestänge kann beispielsweise eine horizontal ausgerichtete Schwenkstellung einnehmen sowie auch zur Horizontalen geneigte Schwenkstellungen, um die Wirkstoffe in einem möglichst gleichbleibenden Abstand zu der zu behandelnden Fläche ausbringen zu können. Bei der zu behandelnden Fläche kann es sich beispielsweise um eine Bodenfläche oder ein Pflanzendach handeln. Üblicherweise können die Ausbringgestänge darüber hinaus in vertikaler Richtung bewegt werden.

Zur Steuerung derartiger landwirtschaftlicher Ausbringvorrichtungen kommen Steuereinrichtungen zum Einsatz, die einen Druckversorgungsanschluss zum Zuführen von unter Druck stehender Hydraulikflüssigkeit und einen Rücklaufanschluss zum Abgeben der Hydraulikflüssigkeit an einen Vorratstank aufweisen. Die Steuereinrichtungen umfassen darüber hinaus eine steuerbare, mehrere Schaltstellungen aufweisende Ventilanordnung und eine mit der Ventilanordnung verbundene Hydraulikzylinderanordnung. Die Hydraulikzylinderanordnung weist eine erste Zylinderwirkfläche und eine zweite Zylinderwirkfläche auf. Über die Ventilanordnung kann zumindest eine der Zylinderwirkflächen mit unter Druck stehender Hydraulikflüssigkeit beaufschlagt werden. Die Schwenkstellung der Ausbringgestänge kann durch Änderung der Schaltstellung der Ventilanordnung verändert werden.

Die Hydraulikzylinderanordnung kann einen oder auch mehrere Hydraulikzylinder aufweisen. Die Hydraulikzylinder umfassen jeweils einen Zylinderkörper, der von einem verschiebbaren Kolben in zwei Zylinderkammern unterteilt wird. Der Kolben weist den Zylinderkammern zugewandte Seiten auf und mindestens eine dieser Seiten wird als Zylinderwirkfläche bezeichnet. Die Hydraulikzylinderanordnung weist zwei Zylinderwirkflächen auf, die jeweils eine Zylinderkammer begrenzen. Der Zufluss von Hydraulikflüssigkeit zu den Zylinderkammern und der Abfluss von Hydraulikflüssigkeit aus den Zylinderkammern und die damit einhergehende Beaufschlagung der Zylinderwirkflächen mit unter Druck stehender Hydraulikflüssigkeit erfolgt in Abhängigkeit vom Schaltzustand der Ventilanordnung und hat eine Verschiebung von mindestens einem Kolben zur Folge, die wiederum zu einer Änderung der Schwenkstellung des Ausbringgestänges führt.

Eine Steuereinrichtung der voranstehend genannten Art ist aus dem Dokument EP 1 167 095 A1 bekannt. Diese Steuereinrichtung weist einen Hydraulikzylinder auf mit einem Zylinderkörper, in dem ein Kolben verschiebbar gelagert ist. Am Kolben ist eine aus dem Zylinderkörper herausragende Kolbenstange gehalten. Der Innenraum des Zylinderkörpers wird vom Kolben in eine erste Zylinderkammer und eine zweite Zylinderkammer unterteilt, wobei die der ersten Zylinderkammer zugewandte Fläche des Kolbens eine erste Zylinderwirkfläche und die der zweiten Zylinderkammer zugewandte Fläche des Kolbens eine zweite Zylinderwirkfläche ausbildet. Die beiden Zylinderwirkflächen sind jeweils mit einem Hydrospeicher verbunden, so dass der Kolben und mit diesem auch die beiden Zylinderwirkflächen federnd gelagert sind. Eine der beiden Zylinderkammern ist an ein Proportional-Wegeventil angeschlossen, über das diese Zylinderkammer wahlweise mit einem Druckversorgungsanschluss oder einem Rücklaufanschluss verbunden werden kann. Dies erlaubt es, der an das Proportional-Wegeventil angeschlossenen Zylinderkammer wahlweise unter Druck stehende Hydraulikflüssigkeit zuzuführen bzw. der Zylinderkammer Hydraulikflüssigkeit zu entnehmen, um den Kolben im Zylinderkörper zu verschieben und dadurch die Schwenkstellung des Ausbringgestänges zu verändern. Eine Änderung der Stellung des Kolbens hat allerdings bei der bekannten Steuereinrichtung zur Folge, dass sich die von den Hydrospeichern auf den Kolben ausgeübte Federkraft verändert, das heißt es verändert sich die Federrate, so dass das Ausbringgestänge härter oder weicher gefedert ist, je nachdem, welche Schwenkstellung das Ausbringgestänge einnimmt.

Aufgabe der vorliegenden Erfindung ist es daher, eine Steuereinrichtung der eingangs genannten Art derart weiterzubilden, dass die Federrate des Ausbringgestänges von dessen Schwenkstellung entkoppelt werden kann.

Diese Aufgabe wird bei einer Steuereinrichtung der gattungsgemäßen Art erfindungsgemäß dadurch gelöst, dass die Zylinderwirkflächen unabhängig von der Schwenkstellung des Ausbringgestänges mit einem vorgebbaren Druck beaufschlagbar sind.

Gemäß der Erfindung können die Zylinderwirkflächen mit einem vorgebbaren Druck beaufschlagt werden, der unabhängig ist von der Schwenkstellung des Ausbringgestänges. Der auf die Zylinderwirkflächen einwirkende Druck bestimmt die Federrate des Ausbringgestänges. Da der Druck unabhängig ist von der Schwenkstellung des Ausbringgestänges, ist auch dessen Federrate von der Schwenkstellung unabhängig.

Die erfindungsgemäße Ausgestaltung der Steuereinrichtung ermöglicht es, eine Federrate des Ausbringgestänges vorzugeben, indem der auf die Zylinderwirkflächen einwirkende Druck vorgegeben wird. Die Härte der Federung des Ausbringgestänges kann somit durch Änderung des auf die beiden Zylinderwirkflächen einwirkenden Druckes verändert werden.

Von Vorteil ist es, wenn die Steuereinrichtung eine Druckregeleinrichtung aufweist. Mittels der Druckregeleinrichtung kann der auf die Zylinderwirkflächen einwirkende Druck geregelt werden. Die Druckregeleinrichtung kann beispielsweise mindestens ein Wegeventil aufweisen, dessen Schaltstellung druckabhängig verändert werden kann. Das mindestens eine Wegeventil kann insbesondere mit Drucksensoren zusammenwirken, die den auf die Zylinderwirkflächen einwirkenden Druck erfassen.

Bei einer bevorzugten Ausgestaltung weist die Steuereinrichtung eine Druckvorgabeeinrichtung auf. Mittels der Druckvorgabeeinrichtung kann der auf die Zylinderwirkflächen einwirkende Druck vorgegeben und insbesondere begrenzt werden.

Die Druckvorgabeeinrichtung ist günstigerweise steuerbar, insbesondere elektrisch steuerbar. Dies gibt auf konstruktiv einfache Weise die Möglichkeit, den auf die Zylinderwirkflächen einwirkenden Druck und damit die Federrate des Ausbringgestänges zu ändern.

Bei einer vorteilhaften Ausgestaltung weist die Druckvorgabeeinrichtung ein Druckbegrenzungsglied auf, dessen Eingang über ein Drosselelement und die Ventilanordnung mit dem Druckversorgungsanschluss verbindbar ist und dessen Ausgang mit dem Rücklaufanschluss verbunden ist. Das Druckbegrenzungsglied stellt sicher, dass der auf die Zylinderwirkflächen einwirkende Druck einen vorgegebenen oder vorgebbaren Wert einnimmt. Wird dieser Wert überschritten, so gibt das Druckbegrenzungsglied eine Strömungsverbindung vom Druckversorgungsanschluss über die Ventilanordnung und das Drosselelement zum Rücklaufanschluss frei und Hydraulikflüssigkeit kann entweichen.

Bevorzugt ist das Druckbegrenzungsglied steuerbar, insbesondere mechanisch oder elektrisch steuerbar, so dass der Wert eingestellt werden kann, bei dessen Überschreiten die Strömungsverbindung zum Rücklaufanschluss freigegeben wird.

Das Druckbegrenzungsglied weist bei einer vorteilhaften Ausführungsform der Erfindung ein Druckbegrenzungsventil auf, insbesondere ein mechanisch oder elektrisch steuerbares Druckbegrenzungsventil.

Zumindest eine der beiden Zylinderwirkflächen ist bei einer vorteilhaften Ausgestaltung der Erfindung über ein Verbindungselement mit veränderbarem Strömungsquerschnitt mit dem zugeordneten Hydrospeicher verbunden. Dies erlaubt es, den Strömungswiderstand der Strömungsverbindung zwischen der Zylinderwirkfläche und dem dieser Zylinderwirkfläche zugeordneten Hydrospeicher gezielt zu verändern. Je größer der Strömungswiderstand zwischen der Zylinderwirkfläche und dem Hydrospeicher ist, desto größer ist die Dämpfung der Bewegung des Ausbringgestänges. Durch die Bereitstellung eines Verbindungselements mit veränderbarem Strömungsquerschnitt kann somit die Dämpfung der Bewegung des Ausbringgestänges variiert werden.

Es kann beispielsweise vorgesehen sein, dass das Verbindungselement mit veränderbarem Strömungsquerschnitt ein steuerbares Proportionalventil aufweist. Vorzugsweise ist das Proportionalventil elektrisch steuerbar.

Besonders günstig ist es, wenn parallel zum Proportionalventil ein Drosselelement geschaltet ist. Mit Hilfe des Drosselelementes kann unabhängig von der Schaltstellung des Proportionalventils eine Strömungsverbindung zwischen der Zylinderwirkfläche und dem zugeordneten Hydrospeicher aufrechterhalten werden, die für einen permanenten Druckausgleich sorgt und somit schlagartige Druckänderungen und ruckartige Bewegungen des Ausbringgestänges verhindert.

Von Vorteil ist es, wenn die Ventilanordnung einen ersten Schaltzustand aufweist, in dem die beiden Zylinderwirkflächen vom Druckversorgungsanschluss und vom Rücklaufanschluss getrennt sind, sowie einen zweiten Schaltzustand, in dem eine der beiden Zylinderwirkflächen mit dem Druckversorgungsanschluss und die andere Zylinderwirkfläche mit dem Rücklaufanschluss verbunden ist, sowie einen dritten Schaltzustand, in dem beide Zylinderwirkflächen mit dem Druckversorgungsanschluss verbunden sind. Im ersten Schaltzustand der Ventilanordnung sind beide Zylinderwirkflächen sowohl vom Druckversorgungsanschluss als auch vom Rücklaufanschluss entkoppelt. Aufgrund der durch den Einsatz der Hydrospeicher erzielten federnden Lagerung der beiden Zylinderwirkflächen kann das Ausbringgestänge in diesem Schaltzustand von Rollbewegungen des Trägers entkoppelt werden. Derartige Rollbewegungen können beispielsweise beim Durchfahren von Schlaglöchern auftreten. Nimmt die Ventilanordnung den zweiten Schaltzustand ein, so ist eine der beiden Zylinderwirkflächen mit dem Druckversorgungsanschluss und die andere Zylinderwirkfläche mit dem Rücklaufanschluss verbunden. Dies erlaubt eine Schwenkbewegung des Ausbringgestänges in einer ersten Schwenkrichtung. Nimmt die Ventilanordnung den dritten Schaltzustand ein, so sind beide Zylinderwirkflächen mit dem Druckversorgungsanschluss verbunden. Es kann aber beispielsweise vorgesehen sein, dass eine der Zylinderwirkflächen über ein Druckbegrenzungsglied mit dem Rücklaufanschluss verbunden ist, so dass die dieser Zylinderwirkfläche zugeführte Hydraulikflüssigkeit abfließen kann, sobald das Druckbegrenzungsglied die Strömungsverbindung zum Rücklaufanschluss freigibt. Dies erlaubt eine Schwenkbewegung des Ausbringgestänges in die der ersten Schwenkrichtung entgegengesetzte Richtung.

Bei einer bevorzugten Ausgestaltung der Erfindung weist die Ventilanordnung zumindest ein elektrisch steuerbares Proportional-Wegeventil auf.

Günstigerweise umfasst das mindestens eine elektrisch steuerbare Proportional-Wegeventil drei Schaltstellungen sowie einen mit dem Druckversorgungsanschluss verbundenen Druckanschluss, einen mit dem Rücklaufanschluss verbundenen Tankanschluss und zwei Arbeitsanschlüsse.

Es kann beispielsweise vorgesehen sein, dass die erste Zylinderwirkfläche mit einem ersten Arbeitsanschluss und die zweite Zylinderwirkfläche mit einem zweiten Arbeitsanschluss verbunden ist. In einer ersten Schaltstellung des Proportional-Wegeventils können beide Arbeitsanschlüsse mit dem Tankanschluss verbunden sein, in einer zweiten Schaltstellung des Proportional-Wegeventils kann einer der beiden Arbeitsanschlüsse mit dem Druckanschluss und der andere Arbeitsanschluss mit dem Tankanschluss verbunden sein, und in einer dritten Schaltstellung des Proportional-Wegeventils können beide Arbeitsanschlüsse mit dem Druckanschluss verbunden sein.

Bei einer besonders kostengünstig herstellbaren Ausgestaltung weist die Steuereinrichtung ein einziges elektrisch steuerbares Proportional-Wegeventil auf, vorzugsweise ein elektrisch steuerbares Proportional-Wegeventil mit drei Schaltstellungen. Eine derartige Ausgestaltung ist insbesondere von Vorteil, wenn die Hydraulikzylinderanordnung nur einen doppelt-wirkenden Hydraulikzylinder aufweist, dessen Zylinderkammern mit dem Proportional-Wegeventil verbunden sind.

Alternativ kann vorgesehen sein, dass die Ventilanordnung ein erstes und ein zweites elektrisch steuerbares Proportional-Wegeventil mit vorzugsweise drei Schaltstellungen aufweist. Eine derartige Ausgestaltung ist insbesondere von Vorteil, wenn die Hydraulikzylinderanordnung zwei Hydraulikzylinder aufweist.

Es kann beispielsweise vorgesehen sein, dass die erste Zylinderwirkfläche über das erste elektrisch steuerbare Proportional-Wegeventil mit dem Druckversorgungsanschluss und dem Rücklaufanschluss verbindbar ist und dass die zweite Zylinderwirkfläche über das zweite elektrisch steuerbare Proportional-Wegeventil mit dem Druckversorgungsanschluss und dem Rücklaufanschluss verbindbar ist.

Bei einer vorteilhaften Ausgestaltung der Erfindung weist das Ausbringgestänge einen ersten Gestängearm und einen zweiten Gestängearm auf, die starr miteinander verbunden und am Träger schwenkbar gelagert sind, und die Hydraulikzylinderanordnung weist einen einzigen Hydraulikzylinder auf, der mit einem ersten Ende an den Träger und mit einem zweiten Ende an das Ausbringgestänge angelenkt ist, wobei der Hydraulikzylinder einen Zylinderkörper aufweist, dessen Innenraum von einem Kolben in eine erste Zylinderkammer und eine zweite Zylinderkammer unterteilt wird, wobei die der ersten Zylinderkammer zugewandte Seite des Kolbens die erste Zylinderwirkfläche und die der zweiten Zylinderkammer zugewandte Seite des Kolbens die zweite Zylinderwirkfläche ausbildet. Eine derartige Ausgestaltung lässt sich kostengünstig verwirklichen. Mit Hilfe des einzigen Hydraulikzylinders kann die Schwenkstellung des Ausbringgestänges verändert werden in Abhängigkeit vom Schaltzustand der Ventilanordnung. Die Ventilanordnung weist bei einer derartigen Ausgestaltung vorzugsweise ein einziges, elektrisch steuerbares Proportional-Wegeventil mit insbesondere drei Schaltstellungen auf mit zwei Arbeitsanschlüssen, wobei ein erster Arbeitsanschluss mit der ersten Zylinderkammer und ein zweiter Arbeitsanschluss mit der zweiten Zylinderkammer des Hydraulikzylinders verbunden ist.

Bevorzugt ist die erste Zylinderkammer mit der voranstehend bereits erläuterten Druckregeleinrichtung oder Druckvorgabeeinrichtung, insbesondere mit einem Druckbegrenzungsglied verbunden. Das Druckbegrenzungsglied ist günstigerweise steuerbar, insbesondere mechanisch oder elektrisch steuerbar.

Bei einer vorteilhaften Ausgestaltung der Erfindung weist das Ausbringgestänge einen ersten Gestängearm und einen zweiten Gestängearm auf, die gelenkig miteinander verbunden und am Träger schwenkbar gelagert sind, und die Hydraulikzylinderanordnung weist einen ersten und einen zweiten Hydraulikzylinder auf, wobei der erste Hydraulikzylinder mit einem ersten Ende an den ersten Gestängearm und mit einem zweiten Ende an den Träger angelenkt ist und einen ersten Zylinderkörper aufweist, dessen Innenraum von einem ersten Kolben in eine erste Zylinderkammer und eine zweite Zylinderkammer unterteilt wird, wobei die der ersten Zylinderkammer zugewandte Seite des ersten Kolbens die erste Zylinderwirkfläche ausbildet, und wobei der zweite Hydraulikzylinder mit einem ersten Ende an den zweiten Gestängearm und mit einem zweiten Ende an den Träger angelenkt ist und einen zweiten Zylinderkörper aufweist, dessen Innenraum von einem zweiten Kolben in eine dritte Zylinderkammer und eine vierte Zylinderkammer unterteilt wird, wobei die der dritten Zylinderkammer zugewandte Seite des zweiten Kolbens die zweite Zylinderwirkfläche ausbildet, und wobei die zweite Zylinderkammer mit der vierten Zylinderkammer in Strömungsverbindung steht.

Soll das Ausbringgestänge in seiner Gesamtheit verschwenkt werden, so kann beispielsweise die erste Zylinderkammer mit dem Druckversorgungsanschluss verbunden werden und die dritte Zylinderkammer kann mit dem Rücklaufanschluss verbunden werden. Dies erlaubt es, der ersten Zylinderkammer unter Druck stehende Hydraulikflüssigkeit zuzuführen und gleichzeitig aus der dritten Zylinderkammer Hydraulikflüssigkeit abzuführen. Dies ermöglicht es, die beiden Kolben zu verschieben, um das Ausbringgestänge in seiner Gesamtheit in einer ersten Schwenkrichtung zu verschwenken, wobei gleichzeitig Hydraulikflüssigkeit von der zweiten Zylinderkammer in die vierte Zylinderkammer strömen kann. Für eine entgegengesetzte Schwenkbewegung des Ausbringgestänges in seiner Gesamtheit kann die erste Zylinderkammer mit dem Rücklaufanschluss verbunden werden und die dritte Zylinderkammer kann mit dem Druckversorgungsanschluss verbunden werden.

Günstigerweise sind die beiden Gestängearme relativ zueinander verschwenkbar. Sollen die beiden Gestängearme relativ zueinander verschwenkt werden, so können die erste und die dritte Zylinderkammer beispielsweise mit dem Druckversorgungsanschluss und die zweite und vierte Zylinderkammer mit dem Rücklaufanschluss verbunden werden. Für eine entgegengesetzte Schwenkbewegung der beiden Gestängearme relativ zu einander können die ersten und die dritte Zylinderkammer mit dem Rücklaufanschluss und die zweite und vierte Zylinderkammer mit dem Druckversorgungsanschluss verbunden werden.

Von Vorteil ist es, wenn zumindest eine der Zylinderkammern, das heißt die erste Zylinderkammer und/oder die zweite Zylinderkammer und/oder die dritte Zylinderkammer und/oder die vierte Zylinderkammer, mit der voranstehend bereits erwähnten Druckregeleinrichtung oder Druckvorgabeeinrichtung, insbesondere mit dem Druckbegrenzungsglied verbunden sind. Das Druckbegrenzungsglied ist günstigerweise steuerbar, insbesondere mechanisch oder elektrisch steuerbar.

Die Erfindung betrifft auch eine landwirtschaftliche Ausbringvorrichtung mit einem an einem Träger schwenkbar lagerbaren Ausbringgestänge, an dem Ausbringorgane, zum Beispiel Spritzdüsen, angeordnet sind zum Ausbringen von flüssigen und/oder festen Wirkstoffen, und mit einer Steuereinrichtung der voranstehend genannten Art. Wie bereits erwähnt, kann mittels der Steuereinrichtung die Federrate des Ausbringgestänges unabhängig von dessen Schwenkstellung vorgegeben werden, insbesondere kann die Federrate des Ausbringgestänges variiert werden.

Die nachfolgende Beschreibung vorteilhafter Ausführungsformen der Erfindung dient im Zusammenhang mit der Zeichnung der näheren Erläuterung. Es zeigen:
- Figur 1:: eine schematische Darstellung einer ersten vorteilhaften Ausführungsform einer erfindungsgemäßen landwirtschaftlichen Ausbringvorrichtung mit einer ersten vorteilhaften Ausführungsform einer erfindungsgemäßen Steuereinrichtung;
- Figur 2:: eine vergrößerte Darstellung von Detail A aus Figur 1;
- Figur 3:: eine schematische Darstellung einer zweiten vorteilhaften Ausführungsform einer erfindungsgemäßen landwirtschaftlichen Ausbringvorrichtung mit einer zweiten vorteilhaften Ausführungsform einer erfindungsgemäßen Steuereinrichtung;
- Figur 4:: eine vergrößerte Darstellung von Detail B aus Figur 3;
- Figur 5:: eine schematische Darstellung einer dritten vorteilhaften Ausführungsform einer erfindungsgemäßen landwirtschaftlichen Ausbringvorrichtung mit einer dritten vorteilhaften Ausführungsform einer erfindungsgemäßen Steuereinrichtung;
- Figur 6:: eine vergrößerte Darstellung von Detail C aus Figur 5.

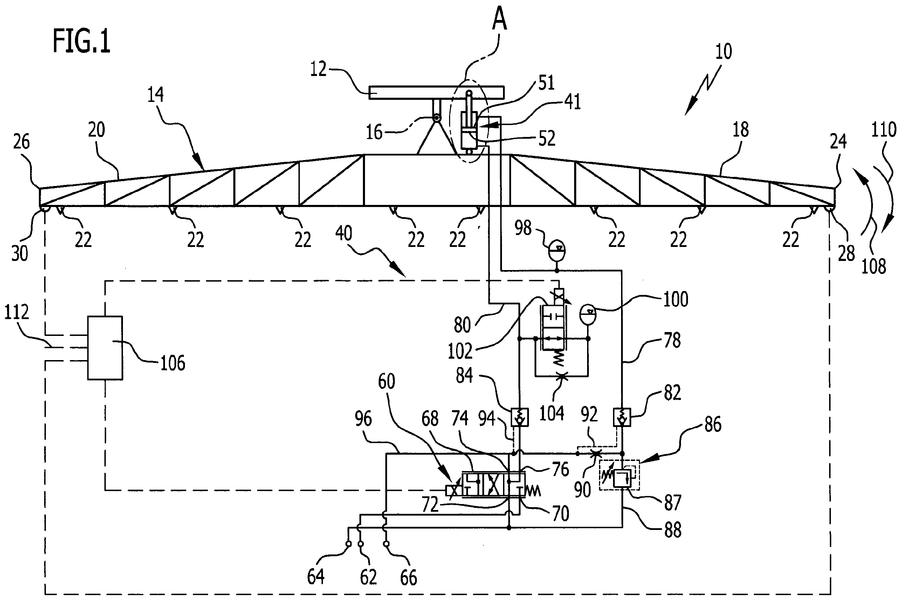

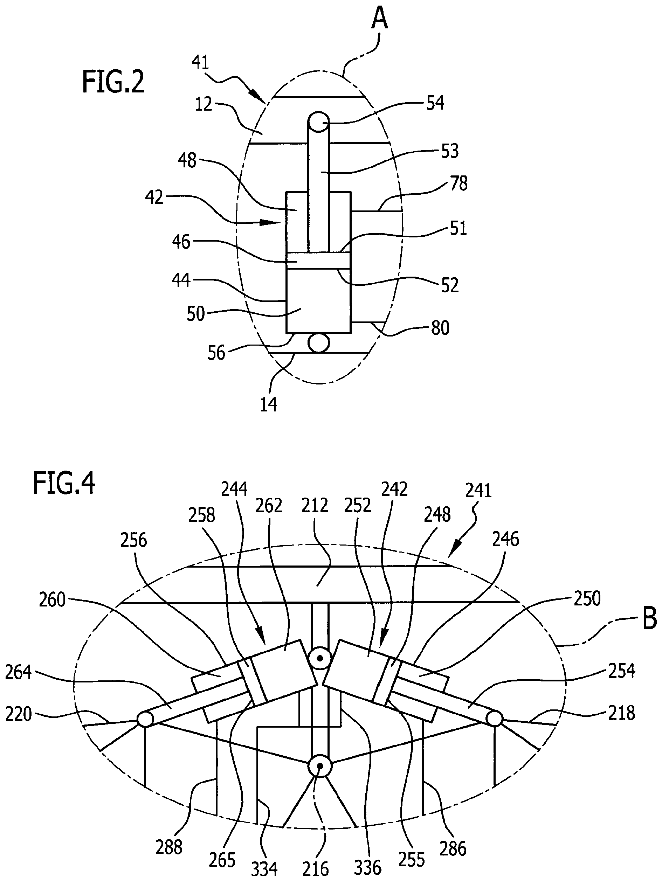

In den Figuren 1 und 2 ist schematisch eine erste vorteilhafte Ausführungsform einer erfindungsgemäßen landwirtschaftlichen Ausbringvorrichtung schematisch dargestellt, die insgesamt mit dem Bezugszeichen 10 belegt ist. Die Ausbringvorrichtung 10 umfasst einen Träger 12, der an einem an sich bekannten und deshalb zur Erzielung einer besseren Übersicht in der Zeichnung nicht dargestellten Stützrahmen in vertikaler Richtung verstellbar und federnd gelagert ist. Der Stützrahmen kann beispielsweise an einem selbstfahrenden Trägerfahrzeug oder an einem von einem Zugfahrzeug gezogenen Anhänger gehalten sein.

Am Träger 12 ist ein Ausbringgestänge 14 um eine horizontale Schwenkachse 16 verschwenkbar gelagert. Das Ausbringgestänge 14 weist einen ersten Gestängearm 18 und einen zweiten Gestängearm 20 auf. Die beiden Gestängearme 18 und 20 sind starr miteinander verbunden und fluchtend zueinander ausgerichtet und tragen an ihrer Unterseite eine Vielzahl von Ausbringorganen 22, die beispielsweise als Spritzdüsen ausgestaltet sein können. Mit Hilfe der Ausbringorgane 22 können flüssige und/oder feste Wirkstoffe, beispielsweise Düngemittel oder Pflanzenschutzmittel, auf eine zu behandelnde Fläche, insbesondere auf eine Bodenfläche oder ein Pflanzendach aufgebracht werden. Außerdem weisen die beiden Gestängearme 18, 20 an ihren freien Enden 24 bzw. 26 jeweils einen Sensor 28, 30 auf. Mit Hilfe der Sensoren 28, 30 kann der Abstand zwischen den Gestängearmen 18, 20 und der zu behandelnden Fläche ermittelt werden.

Die Ausbringvorrichtung 10 weist eine erste vorteilhafte Ausführungsform einer erfindungsgemäßen Steuereinrichtung auf, die insgesamt mit dem Bezugszeichen 40 belegt ist. Mit Hilfe der Steuereinrichtung 40 kann das Ausbringgestänge 14 um die Schwenkachse 16 verschwenkt werden. Die Steuereinrichtung 40 weist eine Hydraulikzylinderanordnung 41 mit einem einzigen Hydraulikzylinder 42 auf. Die Hydraulikzylinderanordnung 41 ist in Figur 2 vergrößert dargestellt. Der Hydraulikzylinder 42 umfasst einen Zylinderkörper 44, in dem ein Kolben 46 verschiebbar gelagert ist. Der Kolben 46 unterteilt den Innenraum des Zylinderkörpers 44 in eine erste Zylinderkammer 48 und eine zweite Zylinderkammer 50. Die der ersten Zylinderkammer 48 zugewandte Seite des Kolbens 46 bildet eine erste Zylinderwirkfläche 51 aus und die der zweiten Zylinderkammer 50 zugewandte Seite des Kolbens 46 bildet eine zweite Zylinderwirkfläche 52 aus. Die beiden Zylinderwirkflächen 51, 52 sind mittels des Kolbens 46 mechanisch miteinander gekoppelt und durch Beaufschlagung mit unter Druck stehender Hydraulikflüssigkeit gegeneinander verspannt.

Die erste Zylinderkammer 48 wird von einer Kolbenstange 53 durchgriffen, die am Kolben 46 festgelegt ist und mit ihrem aus der ersten Zylinderkammer 48 herausragenden Ende 54 versetzt zur Schwenkachse 16 an den Träger 12 angelenkt ist. Das herausragende Ende 54 der Kolbenstange 53 bildet ein erstes Ende des Hydraulikzylinders 42. Ein zweites Ende des Hydraulikzylinders 42 wird von einer der Kolbenstange 53 abgewandten Stirnseite 56 des Zylinderkörpers 44 gebildet und ist an das Ausbringgestänge 14 angelenkt. Der Hydraulikzylinder 42 ist folglich sowohl mit dem Träger 12 als auch mit dem Ausbringgestänge 14 gelenkig verbunden.

Die Steuereinrichtung 40 weist außerdem eine Ventilanordnung 60 auf sowie einen Druckversorgungsanschluss 62 und einen Rücklaufanschluss 64. Zusätzlich zum Druckversorgungsanschluss 62 und zum Rücklaufanschluss 64 weist die Steuereinrichtung 40 einen Steueranschluss 66 auf. An den Druckversorgungsanschluss 62 ist eine an sich bekannte und deshalb in der Zeichnung zur Erzielung einer besseren Übersicht in der Zeichnung nicht dargestellte Druckquelle in Form einer Load-Sensing-Pumpe anschließbar, deren Steuereingang an den Steueranschluss 66 anschließbar ist. An den Rücklaufanschluss 64 ist ein in der Zeichnung zur Erzielung einer besseren Übersicht ebenfalls nicht dargestellter Vorratstank für Hydraulikflüssigkeit anschließbar. Über den Druckversorgungsanschluss 62 kann der Steuereinrichtung 40 von der Load-Sensing-Pumpe unter Druck gesetzte Hydraulikflüssigkeit zugeführt werden, und über den Rücklaufanschluss 64 kann Hydraulikflüssigkeit von der Steuereinrichtung 40 an den Vorratstank abgegeben werden.

Die Ventilanordnung 60 weist ein erstes elektrisch steuerbares Proportional-Wegeventil 68 auf, das als 4/3-Wegeventil ausgestaltet ist mit drei Schaltstellungen und mit einem Druckanschluss 70, einem Tankanschluss 72, einem ersten Arbeitsanschluss 74 und einem zweiten Arbeitsanschluss 76.

Der Druckanschluss 70 ist mit dem Druckversorgungsanschluss 62 verbunden, und der Tankanschluss 72 ist mit dem Rücklaufanschluss 64 verbunden. Der erste Arbeitsanschluss 74 steht über eine erste Arbeitsleitung 78 mit der ersten Zylinderkammer 48 in Strömungsverbindung, und der zweite Arbeitsanschluss 76 steht über eine zweite Arbeitsleitung 80 mit der zweiten Zylinderkammer 50 in Strömungsverbindung.

In die erste Arbeitsleitung 78 ist ein erstes hydraulisch entsperrbares Rückschlagventil 82 geschaltet, und in die zweite Arbeitsleitung 80 ist ein zweites hydraulisch entsperrbares Rückschlagventil 84 geschaltet.

Die Steuereinrichtung 40 umfasst außerdem eine Druckvorgabeeinrichtung 86, die im dargestellten Ausführungsbeispiel ein Druckbegrenzungsglied in Form eines einstellbaren Druckbegrenzungsventils 87 aufweist. Das Druckbegrenzungsventil 87 ist in eine Druckbegrenzungsleitung 88 geschaltet, die im Bereich zwischen dem ersten Arbeitsanschluss 74 und dem ersten hydraulisch entsperrbaren Rückschlagventil 82 von der ersten Arbeitsleitung 78 abzweigt und diese mit dem Rücklaufanschluss 64 verbindet. Im dargestellten Ausführungsbeispiel ist das Druckbegrenzungsventil manuell einstellbar. Alternativ kann zum Beispiel vorgesehen sein, dass das Druckbegrenzungsventil 87 elektrisch steuerbar und an das nachfolgend näher erläuterte elektrische Regelglied 106 angeschlossen ist.

Im Bereich zwischen dem ersten Arbeitsanschluss 74 und dem ersten hydraulisch entsperrbaren Rückschlagventil 82 ist in die erste Arbeitsleitung 78 ein erstes Drosselelement 90 geschaltet, und eine erste Ventilsteuerleitung 92 zweigt zwischen dem ersten Drosselelement 90 und dem ersten Arbeitsanschluss 74 von der ersten Arbeitsleitung 78 ab und erstreckt sich bis zum ersten hydraulisch entsperrbaren Rückschlagventil 82. Das erste hydraulisch entsperrbare Rückschlagventil 82 öffnet in Richtung der ersten Zylinderkammer 48 und kann über die erste Ventilsteuerleitung 92 für einen Strom in Gegenrichtung hydraulisch entsperrt werden.

Im Bereich zwischen dem ersten Arbeitsanschluss 74 und dem ersten Drosselelement 90 zweigt von der ersten Arbeitsleitung 78 auch eine zweite Ventilsteuerleitung 94 ab, die sich bis zum zweiten hydraulisch entsperrbaren Rückschlagventil 84 erstreckt. Das zweite hydraulisch entsperrbare Rückschlagventil 84 öffnet in Richtung der zweiten Zylinderkammer 50 und kann über die zweite Ventilsteuerleitung 94 für einen Strom in Gegenstromrichtung hydraulisch entsperrt werden.

Im Bereich zwischen dem ersten Arbeitsanschluss 74 und dem ersten Drosselelement 90 zweigt von der ersten Arbeitsleitung 78 außerdem eine Pumpsteuerleitung 96 ab, die sich von der ersten Arbeitsleitung 78 bis zum Steueranschluss 66 der Steuereinrichtung 40 erstreckt. Über die Pumpsteuerleitung 96 kann der am ersten Arbeitsanschluss 74 herrschende Druck der Hydraulikflüssigkeit abgegriffen werden zur Steuerung der in der Zeichnung nicht dargestellten Load-Sensing-Pumpe, deren Ausgang an den Druckversorgungsanschluss 62 anschließbar ist.

Im Bereich zwischen dem ersten hydraulisch entsperrbaren Rückschlagventil 82 und der ersten Zylinderkammer 48 ist an die erste Arbeitsleitung 78 ein erster Hydrospeicher 98 angeschlossen, und im Bereich zwischen dem zweiten hydraulisch entsperrbaren Rückschlagventil 84 und der zweiten Zylinderkammer 50 ist an die zweite Arbeitsleitung 80 ein zweiter Hydrospeicher 100 angeschlossen. Die Verbindung zwischen der zweiten Arbeitsleitung 80 und dem zweiten Hydrospeicher 100 erfolgt über ein Verbindungselement mit veränderbarem Strömungsquerschnitt, das in der dargestellten Ausführungsform der Steuereinrichtung 40 als zweites elektrisch steuerbares Proportional-Wegeventil 102 ausgestaltet ist. Das zweite elektrisch steuerbare Proportional-Wegeventil 102 ist als 2/2-Wegeventil ausgestaltet mit zwei Schaltstellungen und mit einem Ventileingang, der an die zweite Arbeitsleitung 80 angeschlossen ist, und mit einem Ventilausgang, der an den zweiten Hydrospeicher 100 angeschlossen ist. Der Strömungsquerschnitt und damit auch der Strömungswiderstand der Verbindung zwischen der zweiten Zylinderwirkfläche 52 und dem zweiten Hydrospeicher 100 sind abhängig von der Stellung, die das zweite Proportional-Wegeventil einnimmt. Parallel zum zweiten Proportional-Wegeventil 102 ist ein zweites Drosselelement 104 geschaltet. Dadurch wird unabhängig von der Schaltstellung des zweiten Proportional-Wegeventils 102 eine Strömungsverbindung zwischen der zweiten Zylinderwirkfläche 52 und dem zweiten Hydrospeicher 100 aufrechterhalten, die für einen permanenten Druckausgleich sorgt und somit schlagartige Druckänderungen und ruckartige Bewegungen des Ausbringgestänges 14 verhindert.

Das erste Proportional-Wegeventil 68 ist ebenso wie das zweite Proportional-Wegeventil 102 mit einem elektrischen Regelglied 106 verbunden, an das auch die Sensoren 28 und 30 angeschlossen sind. Außerdem ist an das Regelglied 106 eine Kommunikationsleitung 112, zum Beispiel ein CAN-Bus, angeschlossen, über die das Regelglied 106 mit einer externen Steuereinrichtung kommunizieren kann. Mittels des elektrischen Regelglieds 106 können elektrische Steuersignale generiert werden zur Steuerung des ersten Proportional-Wegeventils 68 und des zweiten Proportional-Wegeventils 102.

Die Ventilanordnung 60 weist einen ersten Schaltzustand, einen zweiten Schaltzustand und einen dritten Schaltzustand auf. Im ersten Schaltzustand nimmt das erste Proportional-Wegeventil 68 eine erste Schaltstellung ein, in der sowohl der erste Arbeitsanschluss 74 als auch der zweite Arbeitsanschluss 76 mit dem Rücklaufanschluss 64 verbunden sind. In einem zweiten Schaltzustand der Ventilanordnung 60 nimmt das erste Proportional-Wegeventil 68 eine zweite Schaltstellung ein, in der der erste Arbeitsanschluss 74 mit dem Druckanschluss 70 und der zweite Arbeitsanschluss 76 mit dem Tankanschluss 72 verbunden ist. Im dritten Schaltzustand der Ventilanordnung 60 nimmt das erste Proportional-Wegeventil 68 eine dritte Schaltstellung ein, in der sowohl der erste Arbeitsanschluss 74 als auch der zweite Arbeitsanschluss 76 mit dem Druckanschluss 70 verbunden sind. Die jeweiligen Schaltstellungen des ersten Proportional-Wegeventils 68 werden vom elektrischen Regelglied 106 vorgegeben.

Im ersten Schaltzustand der Ventilanordnung 60 nehmen die beiden hydraulisch entsperrbaren Rückschlagventile 82, 84 ihre Sperrstellung ein, so dass sowohl die erste Zylinderwirkfläche 51 als auch die zweite Zylinderwirkfläche 52 vom Druckversorgungsanschluss 62 und vom Rücklaufanschluss 64 entkoppelt sind. Die erste Zylinderwirkfläche 51 ist jedoch weiterhin mit dem ersten Hydrospeicher 98 verbunden und die zweite Zylinderwirkfläche 52 ist weiterhin mit dem zweiten Hydrospeicher 100 verbunden. Das Ausbringgestänge 14 kann in diesem Schaltzustand eine gefederte Pendelbewegung um die Schwenkachse 16 ausführen, wobei die Federung durch die beiden Hydrospeicher 98, 100 gewährleistet ist. Mit Hilfe des zweiten Proportional-Wegeventils 102 kann der Strömungsquerschnitt und damit auch der Strömungswiderstand der Verbindung zwischen der zweiten Zylinderwirkfläche 52 und dem zweiten Hydrospeicher 100 verändert werden. Je kleiner der Strömungsquerschnitt ist, desto größer ist der Strömungswiderstand und desto größer ist auch die Dämpfung, die die Pendelbewegung des Ausbringgestänges 14 erfährt. Durch Vorgabe der Stellung des zweiten Proportional-Wegeventils 102 kann somit die Dämpfung der Pendelbewegung des Ausbringgestänges 14 vorgegeben werden.

Im zweiten Schaltzustand der Ventilanordnung 60 steht der erste Arbeitsanschluss 74 mit dem Druckversorgungsanschluss 62 in Strömungsverbindung, und der zweite Arbeitsanschluss 76 steht mit dem Rücklaufanschluss 64 in Strömungsverbindung. Dies hat zur Folge, dass der ersten Zylinderkammer 48 über die erste Arbeitsleitung 78 unter Druck stehende Hydraulikflüssigkeit zugeführt werden kann. Gleichzeitig wird das zweite hydraulisch entsperrbare Rückschlagventil 84 entsperrt, so dass die zweite Zylinderkammer 50 über die zweite Arbeitsleitung 80 und dem zweiten Arbeitsanschluss 76 mit dem Rücklaufanschluss 64 verbunden ist und Hydraulikflüssigkeit aus der zweiten Zylinderkammer 50 abfließen kann. Der Kolben 46 wird in Richtung der zweiten Zylinderkammer 50 verschoben, so dass sich die Länge des Hydraulikzylinders 42 verringert und das Ausbringgestänge 14 in einer ersten Schwenkrichtung, die in Figur 1 durch den Pfeil 108 symbolisiert ist, verschwenkt wird.

Im dritten Schaltzustand der Ventilanordnung 60 nimmt das erste Proportional-Wegeventil 68 seine dritte Schaltstellung ein, in der beide Arbeitsanschlüsse 74, 76 mit dem Druckversorgungsanschluss 62 in Strömungsverbindung stehen. Beide Zylinderkammern 48, 50 können somit mit unter Druck stehender Hydraulikflüssigkeit versorgt werden. Da jedoch die erste Zylinderwirkfläche 51 aufgrund der die erste Zylinderkammer 48 durchgreifenden Kolbenstange 53 kleiner ist als die zweite Zylinderwirkfläche 51 und zudem der Druck in der ersten Zylinderkammer 48 durch das Druckbegrenzungsventil 87 begrenzt wird, hat die gleichzeitige Druckbeaufschlagung beider Zylinderkammern 48, 50 zur Folge, dass auf die zweite Zylinderwirkfläche 52 eine größere Kraft einwirkt als auf die erste Zylinderwirkfläche 51. Dies wiederum hat eine Bewegung der Kolbens 46 in Richtung der ersten Zylinderkammer 48 zur Folge, so dass die zweite Zylinderkammer 50 Hydraulikflüssigkeit aufnimmt und aus der ersten Zylinderkammer 48 Hydraulikflüssigkeit abfließt. Sobald der in der ersten Arbeitsleitung 78 herrschende Druck der Hydraulikflüssigkeit einen durch das Druckbegrenzungsventil 87 vorgegebenen Maximalwert überschreitet, gibt das Druckbegrenzungsventil 87 die Strömungsverbindung von der ersten Arbeitsleitung 78 zum Rücklaufanschluss 64 frei. Die aus der ersten Zylinderkammer 48 abfließende Hydraulikflüssigkeit kann somit von dem an den Rücklaufanschluss anschließbaren Vorratstank aufgenommen werden. Die Vergrößerung des Volumens der zweiten Zylinderkammer 50 unter gleichzeitiger Verringerung des Volumens der ersten Zylinderkammer 48 hat zur Folge, dass sich die Länge des Hydraulikzylinders 42 vergrößert und dadurch das Ausbringgestänge 14 in die der ersten Schwenkrichtung 108 entgegen gerichtete zweite Schwenkrichtung 110 verschwenkt wird.

Der Druck, der sich in der ersten Zylinderkammer 48 und in der zweiten Zylinderkammer 50 einstellt, wird durch das Druckbegrenzungsventil 87 vorgegeben und bestimmt die Härte der Federung des Ausbringgestänges 14, das heißt dessen Federrate.

Durch eine Änderung des Schaltzustandes der Ventilanordnung 60 kann somit das Ausbringgestänge 14 in die erste Schwenkrichtung 108 und in die zweite Schwenkrichtung 110 verschwenkt werden. Die Federrate kann unabhängig von der Schwenkstellung des Ausbringgestänges 14 mittels des Druckbegrenzungsventils 87 auf einen vorgegebenen Wert eingestellt werden, und durch Änderung der Schaltstellung des zweiten Proportional-Wegeventils 102 kann die Dämpfung der Schwenkbewegung variiert werden.

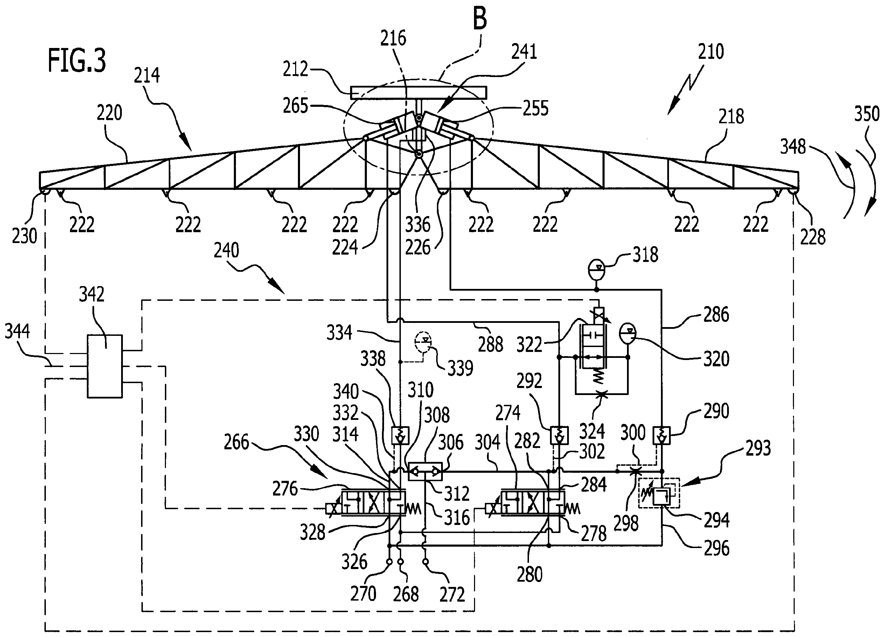

In den Figuren 3 und 4 ist eine zweite vorteilhafte Ausführungsform einer erfindungsgemäßen landwirtschaftlichen Ausbringvorrichtung schematisch dargestellt, die insgesamt mit dem Bezugszeichen 210 belegt ist. Die Ausbringvorrichtung 210 weist ähnlich wie die voranstehend unter Bezugnahme auf die Figuren 1 und 2 erläuterte Ausbringvorrichtung 10 einen Träger 212 auf, der an einem in der Zeichnung nicht dargestellten Stützrahmen in vertikaler Richtung verstellbar und federnd gelagert ist.

Am Träger 212 ist ein Ausbringgestänge 214 um eine Schwenkachse 216 verschwenkbar gelagert. Das Ausbringgestänge 214 weist einen ersten Gestängearm 218 und einen zweiten Gestängearm 220 auf, die um die Schwenkachse 216 verschwenkt werden können. Im Gegensatz zu den Gestängearmen 18 und 20 der voranstehend erläuterten Ausbringvorrichtung 10 sind die Gestängearme 218 und 220 der Ausbringvorrichtung 210 gelenkig miteinander verbunden. Wie nachfolgend näher erläutert wird, gibt dies zum einen die Möglichkeit, die beiden Gestängearme 218, 220 gemeinsam in einer ersten Schwenkrichtung und einer der ersten Schwenkrichtung entgegen gerichteten zweiten Schwenkrichtung zu verschwenken, und zum anderen können die beiden Gestängearme 218, 220 auch relativ zueinander um die Schwenkachse 216 verschwenkt werden.

An der Unterseite der Gestängearme 218, 220 sind Ausbringorgane 222 gehalten, beispielsweise Spritzdüsen. Mittels der Ausbringorgane 222 können flüssige und/oder feste Wirkstoffe, beispielsweise Pflanzenschutzmittel oder Düngemittel, auf eine zu behandelnde Fläche ausgebracht werden, beispielsweise auf eine Bodenfläche oder auf ein Pflanzendach.

An den einander zugewandten und den einander abgewandten Enden der beiden Gestängearme 218, 220 sind Sensoren 224, 226, 228 und 230 angeordnet, mit deren Hilfe der Abstand des jeweiligen Gestängearms 218, 220 zu der zu behandelnden Fläche ermittelt werden kann.

Zum Verschwenken der Gestängearme 218, 220 kommt eine zweite vorteilhafte Ausführungsform einer erfindungsgemäßen Steuereinrichtung zum Einsatz, die insgesamt mit dem Bezugszeichen 240 belegt ist. Die Steuereinrichtung 240 weist eine in Figur 4 vergrößert dargestellte Hydraulikzylinderanordnung 241 auf mit einem ersten Hydraulikzylinder 242 und einem zweiten Hydraulikzylinder 244. Außerdem weist die Steuereinrichtung 240 eine nachfolgend näher erläuterte Ventilanordnung 266 auf sowie einen Druckversorgungsanschluss 268, eine Rücklaufanschluss 270 und einen Steueranschluss 271.

Der erste Hydraulikzylinder 242 umfasst einen ersten Zylinderkörper 246, dessen Innenraum von einem verschiebbar im ersten Zylinderkörper 246 gelagerten ersten Kolben 248 in eine erste Zylinderkammer 250 und eine zweite Zylinderkammer 252 unterteilt ist. Die erste Zylinderkammer 250 ist von einer ersten Kolbenstange 254 durchgriffen, die am ersten Kolben 248 festgelegt ist und mit ihrem aus der ersten Zylinderkammer 250 herausragenden Ende an den ersten Gestängearm 218 angelenkt ist. Mit seinem der ersten Kolbenstange 254 abgewandten Ende ist der erste Zylinderkörper 246 an den Träger 212 angelenkt. Die der ersten Zylinderkammer 250 zugewandte Seite des ersten Kolbens 248 bildet eine erste Zylinderwirkfläche 255 aus.

Der zweite Hydraulikzylinder 244 ist identisch ausgestaltet wie der erste Hydraulikzylinder 242. Der zweite Hydraulikzylinder 244 weist einen zweiten Zylinderkörper 256 auf, dessen Innenraum von einem verschiebbar im zweiten Zylinderkörper 256 gelagerten zweiten Kolben 258 in eine dritte Zylinderkammer 260 und eine vierte Zylinderkammer 262 unterteilt ist. Die dritte Zylinderkammer 260 ist von einer zweiten Kolbenstange 264 durchgriffen, die am zweiten Kolben 258 festgelegt und mit ihrem aus der dritten Zylinderkammer 262 herausragenden Ende an den zweiten Gestängearm 220 angelenkt ist. Mit seinem der zweiten Kolbenstange 264 abgewandten Ende ist der zweite Zylinderkörper 256 an den Träger 212 angelenkt. Die der dritten Zylinderkammer 260 zugewandte Seite des zweiten Kolbens 258 bildet eine zweite Zylinderwirkfläche 265 aus.

Wie bereits erwähnt, weist die Steuereinrichtung 240 eine Ventilanordnung 266 auf sowie einen Druckversorgungsanschluss 268, einen Rücklaufanschluss 270 und einen Steueranschluss 272. An den Druckversorgungsanschluss 268 ist eine an sich bekannte und deshalb zur Erzielung einer besseren Übersicht in der Zeichnung nicht dargestellte Load-Sensing-Pumpe anschließbar, deren Steuereingang an den Steueranschluss 272 anschließbar ist. An den Rücklaufanschluss 270 ist ein an sich ebenfalls bekannter und deshalb in der Zeichnung nicht dargestellter Vorratstank für Hydraulikflüssigkeit anschließbar. Über den Druckversorgungsanschluss 268 kann der Steuereinrichtung 240 von der Load-Sensing-Pumpe unter Druck gesetzte Hydraulikflüssigkeit zugeführt werden, und über den Rücklaufanschluss 270 kann Hydraulikflüssigkeit von der Steuereinrichtung 240 an den Vorratstank abgegeben werden.

Die Ventilanordnung 266 weist ein erstes elektrisch steuerbares Proportional-Wegeventil 274 und ein zweites elektrisch steuerbares Proportional-Wegeventil 276 auf. Die beiden Wegeventile 274 und 276 sind identisch ausgestaltet in Form von 4/3-Wegeventilen mit drei Schaltstellungen.

Das erste Proportional-Wegeventil 274 umfasst einen ersten Druckanschluss 278, einen ersten Tankanschluss 280 sowie einen ersten Arbeitsanschluss 282 und einen zweiten Arbeitsanschluss 284. Der erste Druckanschluss 278 ist mit dem Druckversorgungsanschluss 268 verbunden, und der erste Tankanschluss 280 ist mit dem Rücklaufanschluss 270 verbunden. Über eine erste Arbeitsleitung 286 steht der erste Arbeitsanschluss 282 mit der ersten Zylinderkammer 250 in Strömungsverbindung, und über eine zweite Arbeitsleitung 288 steht der zweite Arbeitsanschluss 284 mit der dritten Zylinderkammer 260 in Strömungsverbindung.

In die erste Arbeitsleitung 286 ist ein erstes hydraulisch entsperrbares Rückschlagventil 290 geschaltet, und in die zweite Arbeitsleitung 288 ist ein zweites hydraulisch entsperrbares Rückschlagventil 292 geschaltet.

Die Steuereinrichtung 240 umfasst außerdem eine Druckvorgabeeinrichtung 293, die im dargestellten Ausführungsbeispiel ein Druckbegrenzungsglied in Form eines einstellbaren Druckbegrenzungsventils 294 aufweist. Das Druckbegrenzungsventil 294 ist in eine Druckbegrenzungsleitung 296 geschaltet, die im Bereich zwischen dem ersten Arbeitsanschluss 282 und dem ersten hydraulisch entsperrbaren Rückschlagventil 290 von der ersten Arbeitsleitung 286 abzweigt und diese mit dem Rücklaufanschluss 270 verbindet. Im dargestellten Ausführungsbeispiel ist das Druckbegrenzungsventil 294 manuell einstellbar. Alternativ kann zum Beispiel vorgesehen sein, dass das Druckbegrenzungsventil 294 elektrisch steuerbar und an das nachfolgend näher erläuterte elektrische Regelglied 342 angeschlossen ist.

Im Bereich zwischen dem ersten Arbeitsanschluss 282 und dem ersten entsperrbaren Rückschlagventil 290 ist in die erste Arbeitsleitung 286 ein erstes Drosselelement 298 geschaltet. Das erste hydraulisch entsperrbare Rückschlagventil 290 öffnet in Richtung der ersten Zylinderkammer 250 und kann über eine erste Ventilsteuerleitung 300 für einen Strom in Gegenrichtung hydraulisch entsperrt werden. Die erste Ventilsteuerleitung 300 zweigt zwischen dem ersten Drosselelement 298 und dem ersten Arbeitsanschluss 282 von der ersten Arbeitsleitung 286 ab.

Das zweite hydraulisch entsperrbare Rückschlagventil 292 öffnet in Richtung der dritten Zylinderkammer 260 und kann über eine zweite Ventilsteuerleitung 302 für einen Strom in Gegenrichtung hydraulisch entsperrt werden. Die zweite Ventilsteuerleitung 302 zweigt zwischen dem ersten Drosselelement 298 und dem ersten Arbeitsanschluss 282 von der ersten Arbeitsleitung 286 ab.

Zwischen dem ersten Arbeitsanschluss 282 und dem ersten Drosselelement 298 zweigt eine erste Pumpsteuerleitung 304 von der ersten Arbeitsleitung 286 ab, die sich bis zu einem ersten Eingang 306 eines Wechselventils 308 erstreckt. Zusätzlich zum ersten Eingang 306 weist das Wechselventil 308 einen zweiten Eingang 310 und einen Ausgang 312 auf. An den zweiten Eingang 310 ist eine zweite Pumpsteuerleitung 314 angeschlossen, die nachfolgend noch näher erläutert wird. Der Ausgang 312 des Wechselventils 308 steht über eine Ausgangsleitung 316 mit dem Steueranschluss 272 der Steuereinrichtung 240 in Strömungsverbindung. Die erste Pumpsteuerleitung 304 und die zweite Pumpsteuerleitung 314 können jeweils mit unter Druck stehender Hydraulikflüssigkeit beaufschlagt werden, und der größere der beiden Drücke kann mit Hilfe des Wechselventils 308 abgegriffen werden zur Steuerung der in der Zeichnung nicht dargestellten Load-Sensing-Pumpe, deren Ausgang an den Druckversorgungsanschluss 268 anschließbar ist.

Im Bereich zwischen dem ersten hydraulisch entsperrbaren Rückschlagventil 290 und der ersten Zylinderkammer 250 ist an die erste Arbeitsleitung 286 ein erster Hydrospeicher 318 angeschlossen, und im Bereich zwischen dem zweiten hydraulisch entsperrbaren Rückschlagventil 292 und der dritten Zylinderkammer 260 ist an die zweite Arbeitsleitung 288 ein zweiter Hydrospeicher 320 angeschlossen. Die Verbindung zwischen der zweiten Arbeitsleitung 288 und dem zweiten Hydrospeicher 320 erfolgt über ein Verbindungselement mit veränderbarem Strömungsquerschnitt, das im dargestellten Ausführungsbeispiel als drittes elektrisch steuerbares Proportional-Wegeventils 322 ausgeschaltet ist. Das dritte elektrisch steuerbare Proportional-Wegeventil 322 ist als 2/2-Wegeventil ausgestaltet mit zwei Schaltstellungen und mit einem Ventileingang, der an die zweite Arbeitsleitung 288 angeschlossen ist, und mit einem Ventilausgang, der an den zweiten Hydrospeicher 320 angeschlossen ist. Der Strömungsquerschnitt und damit auch der Strömungswiderstand der Verbindung zwischen der zweiten Zylinderwirkfläche 265 und dem zweiten Hydrospeicher 320 sind abhängig von der Stellung, die das dritte Proportional-Wegeventil 322 einnimmt. Parallel zum dritten Proportional-Wegeventil 322 ist ein zweites Drosselelement 324 geschaltet. Mit Hilfe des zweiten Drosselelements 324 kann unabhängig von der Schaltstellung des dritten Proportional-Wegeventils 322 eine Strömungsverbindung zwischen der zweiten Arbeitsleitung 288 und dem zweiten Hydrospeicher 320 aufrechterhalten werden, die für einen permanenten Druckausgleich sorgt und schlagartige Druckänderungen und ruckartige Bewegungen des Ausbringgestänges 214 verhindert.

Das zweite Proportional-Wegeventil 276 weist einen zweiten Druckanschluss 326, einen zweiten Tankanschluss 328 sowie einen dritten Arbeitsanschluss 330 und einen vierten Arbeitsanschluss 332 auf. Der zweite Druckanschluss 326 ist mit dem Druckversorgungsanschluss 268 verbunden, und der zweite Tankanschluss 328 ist mit dem Rücklaufanschluss 270 verbunden

Der dritte Arbeitsanschluss 330 steht über die voranstehend bereits erwähnte zweite Pumpsteuerleitung 314 mit dem zweiten Eingang 310 des Wechselventils 308 in Strömungsverbindung. Der vierte Arbeitsanschluss 332 steht über eine dritte Arbeitsleitung 334 mit einer Verbindungsleitung 336 in Strömungsverbindung, die die zweite Zylinderkammer 252 mit der vierten Zylinderkammer 262 verbindet. Die zweite Zylinderkammer 252 steht somit mit der vierten Zylinderkammer 262 in Strömungsverbindung, und dies wiederum hat zur Folge, dass die erste Zylinderwirkfläche 255 über den ersten Kolben 248, die zweite Zylinderkammer 252, die Verbindungsleitung 336, die vierte Zylinderkammer 262 und den zweiten Kolben 258 hydraulisch mit der zweiten Zylinderwirkfläche 265 gekoppelt ist. Durch Beaufschlagung mit unter Druck stehender Hydraulikflüssigkeit sind die beiden Zylinderwirkflächen 255, 265 gegeneinander verspannt.

In die dritte Arbeitsleitung 334 ist ein drittes hydraulisch entsperrbares Rückschlagventil 338 geschaltet, das in Richtung der Verbindungsleitung 336 öffnet und über eine dritte Ventilsteuerleitung 340 für einen Strom in Gegenrichtung hydraulisch entsperrt werden kann. Die dritte Ventilsteuerleitung 340 zweigt von der zweiten Pumpsteuerleitung 314 ab.

An die dritte Arbeitsleitung 334 kann im Bereich zwischen dem dritten hydraulisch entsperrbaren Rückschlagventil 338 und der Verbindungsleitung 336 ein in Figur 3 gestrichelt dargestellter optionaler Hydrospeicher 339 angeschlossen sein.

Mit Hilfe eines elektrischen Regelglieds 342 sind das erste Proportional-Wegeventil 274, das zweite Proportional-Wegeventil 276 und das dritte Proportional-Wegeventil 322 elektrisch steuerbar. Das elektrische Regelglied 342 ist mit den Sensoren 228, 230 elektrisch verbunden. Außerdem ist an das Regelglied 342 eine Kommunikationsleitung 344 angeschlossen, zum Beispiel ein CAN-Bus, über die das Regelglied 342 mit einer externen Steuereinrichtung kommunizieren kann. Das Regelglied 342 kann darüber hinaus mit weiteren Sensoren in signalleitender Verbindung stehen, beispielsweise mit Drucksensoren, mit deren Hilfe der Druck in mindestens einer der Arbeitsleitungen 286, 288, 334 erfasst werden kann.

Die Ventilanordnung 266 weist einen ersten Schaltzustand auf, in dem das erste Proportional-Wegeventil 274 und das zweite Proportional-Wegeventil 276 jeweils eine erste Schaltstellung einnehmen.

In der ersten Schaltstellung des ersten Proportional-Wegeventils 274 sind der erste Arbeitsanschluss 282 und der zweite Arbeitsanschluss 284 mit dem Rücklaufanschluss 270 verbunden. Dies hat zur Folge, dass das erste entsperrbare Rückschlagventil 290 und das zweite entsperrbare Rückschlagventil 292 ihre Sperrstellungen einnehmen und die erste Zylinderwirkfläche 255 ebenso wie die zweite Zylinderwirkfläche 265 vom Druckversorgungsanschluss 268 und vom Rücklaufanschluss 270 getrennt sind. Die beiden Zylinderwirkflächen 255 und 265 sind jedoch weiterhin mit dem jeweils zugeordneten ersten beziehungsweise zweiten Hydrospeicher 318, 320 verbunden, wobei der Strömungswiderstand zwischen der zweiten Zylinderwirkfläche 265 und dem zweiten Hydrospeicher 320 mittels des dritten Proportional-Wegeventils 322 verändert werden kann.

In der ersten Schaltstellung des zweiten Proportional-Wegeventils 276 sind der dritte Arbeitsanschluss 330 und der vierte Arbeitsanschluss 332 mit dem Rücklaufanschluss 270 verbunden. Dies hat zur Folge, dass auch das dritte hydraulisch entsperrbare Rückschlagventil 338 seine Sperrstellung einnimmt und folglich die zweite Zylinderkammer 252 sowie die vierte Zylinderkammer 262 vom Druckversorgungsanschluss 268 und vom Rücklaufanschluss 270 getrennt sind.

Im ersten Schaltzustand der Ventilanordnung 266 können die beiden Gestängearme 218, 220 des Ausbringgestänges 214 eine gemeinsame gefederte Pendelbewegung um die Schwenkachse 216 ausführen, wobei die Federung durch die beiden Hydrospeicher 318, 320 gewährleistet ist und die Dämpfung der Pendelbewegung verändert werden kann, indem der Strömungswiderstand der Verbindung zwischen der zweiten Zylinderwirkfläche 265 und dem zweiten Hydrospeicher 320 mittels des dritten Proportional-Wegeventils 322 verändert wird.

In einem zweiten Schaltzustand der Ventilanordnung 266 nimmt das erste Proportional-Wegeventil 274 eine zweite Schaltstellung ein, wohingegen das zweite Proportional-Wegeventil 276 seine erste Schaltstellung beibehält. In der zweiten Schaltstellung des ersten Proportional-Wegeventils 274 ist der erste Arbeitsanschluss 282 mit dem Druckversorgungsanschluss 268 verbunden, und der zweite Arbeitsanschluss 284 ist mit dem Rücklaufanschluss 270 verbunden. Dies hat zur Folge, dass der ersten Zylinderkammer 250 unter Druck stehende Hydraulikflüssigkeit zugeführt werden kann. Gleichzeitig wird das zweite hydraulisch entsperrbare Rückschlagventil 292 entsperrt, so dass aus der dritten Zylinderkammer 260 Hydraulikflüssigkeit abfließen kann. Da die zweite Zylinderkammer 252 über die Verbindungsleitung 336 mit der vierten Zylinderkammer 262 verbunden ist, kann Hydraulikflüssigkeit von der zweiten Zylinderkammer 252 zur vierten Zylinderkammer 262 strömen. Der erste Kolben 248 verschiebt sich in Richtung der zweiten Zylinderkammer 252, so dass sich die Länge des ersten Hydraulikzylinders 242 verringert, und gleichzeitig verschiebt sich der zweite Kolben 258 in Richtung der dritten Zylinderkammer, so dass sich die Länge des zweiten Hydraulikzylinders 244 vergrößert. Dies hat eine gemeinsame Schwenkbewegung der beiden Gestängearme 218, 220 in einer ersten Schwenkrichtung 348 zur Folge.

In einem dritten Schaltzustand der Ventilanordnung 266 nimmt das erste Proportional-Wegeventil 274 eine dritte Schaltstellung ein und das zweite Proportional-Wegeventil 276 behält seine erste Schaltstellung bei. In der dritten Schaltstellung des ersten Proportional-Wegeventils 274 sind der erste Arbeitsanschluss 282 und der zweite Arbeitsanschluss 284 mit dem Druckversorgungsanschluss 268 verbunden. Über die erste Arbeitsleitung 286 wird die erste Zylinderkammer 250 mit unter Druck stehender Hydraulikflüssigkeit beaufschlagt, und über die zweite Arbeitsleitung 288 wird die dritte Zylinderkammer 260 mit unter Druck stehender Hydraulikflüssigkeit beaufschlagt. Sobald der in der ersten Arbeitsleitung 286 herrschende Druck der Hydraulikflüssigkeit einen durch das Druckbegrenzungsventil 294 vorgegebenen Maximalwert überschreitet, gibt dass das Druckbegrenzungsventil 294 die Strömungsverbindung von der ersten Arbeitsleitung 286 zum Rücklaufanschluss 270 frei. Dies hat zur Folge, dass aus der ersten Zylinderkammer 250 Hydraulikflüssigkeit abfließen und in die dritte Zylinderkammer 260 Hydraulikflüssigkeit einströmen kann, wobei die über die Verbindungsleitung 336 ein Volumenausgleich zwischen der vierten Zylinderkammer 262 und der zweiten Zylinderkammer 256 sichergestellt ist. Die Vergrößerung des Volumens der dritten Zylinderkammer 260 unter gleichzeitiger Verringerung des Volumens der ersten Zylinderkammer 250 hat eine gemeinsame Schwenkbewegung der beiden Gestängearme 218, 220 um die Schwenkachse 216 in einer der ersten Schwenkrichtung 348 entgegengesetzten zweiten Schwenkrichtung 350 zur Folge.

Die Ventilanordnung 266 der Steuereinrichtung 240 weist darüber hinaus einen vierten Schaltzustand auf, in dem das erste Proportional-Wegeventil 274 seine voranstehend bereits erläuterte dritte Schaltstellung und das zweite Proportional-Wegeventil 276 eine zweite Schaltstellung einnimmt. In der zweiten Schaltstellung des zweiten Proportional-Wegeventils 276 ist der dritte Arbeitsanschluss 330 mit dem Druckversorgungsanschluss 268 verbunden und der vierte Arbeitsanschluss 332 ist mit dem Rücklaufanschluss 270 verbunden. Dies hat zur Folge, dass das dritte hydraulisch entsperrbare Rückschlagventil 338 entsperrt und dadurch aus der zweiten Zylinderkammer 252 und aus der vierten Zylinderkammer 262 Hydraulikflüssigkeit abfließen kann, so dass sich deren Volumina verringern unter gleichzeitiger Vergrößerung der Volumina der ersten Zylinderkammer 250 und der dritten Zylinderkammer 260. Dies bewirkt, dass die beiden Gestängearme 218, 220 in einander entgegen gerichtete Richtungen um die Schwenkachse 216 verschwenkt werden, wobei sie mit ihren freien Enden einen zunehmenden Abstand zu der zu behandelnden Fläche einnehmen, das heißt die Gestängearme 218, 220 werden nach oben verschwenkt.

Die Ventilanordnung 266 weist außerdem einen fünften Schaltzustand auf, in dem das erste Proportional-Wegeventil 274 seine voranstehend bereits erläuterte zweite Schaltstellung und das zweite Proportional-Wegeventil 276 eine dritte Schaltstellung einnimmt. In der dritten Schaltstellung des zweiten Proportional-Wegeventils sind der dritte Arbeitsanschluss 330 und der vierte Arbeitsanschluss 332 mit dem Druckversorgungsanschluss 268 verbunden, so dass der zweiten Zylinderkammer 252 und der vierten Zylinderkammer 262 unter Druck stehende Hydraulikflüssigkeit zugeführt werden kann. Da das erste Proportional-Wegeventil seine zweite Schaltstellung einnimmt, sind das erste entsperrbare Rückschlagventil 290 und das zweite entsperrbare Rückschlagventil entsperrt. Über die zweite Arbeitsleitung 288 kann Hydraulikflüssigkeit aus der dritten Zylinderkammer 260 abfließen. Sobald der in der ersten Arbeitsleitung 286 herrschende Druck der Hydraulikflüssigkeit den durch das Druckbegrenzungsventil 294 vorgegebenen Maximalwert überschreitet, gibt das Druckbegrenzungsventil 294 die Strömungsverbindung von der ersten Arbeitsleitung 286 zum Rücklaufanschluss 270 frei, so dass auch aus der ersten Zylinderkammer 250 Hydraulikflüssigkeit abfließen kann. Die Volumina der ersten Zylinderkammer 250 und der dritten Zylinderkammer 260 verringern sich, und die Volumina der zweiten Zylinderkammer 252 und der vierten Zylinderkammer 262 vergrößern sich. Dies bewirkt, dass die beiden Gestängearme 218, 220 in einander entgegen gerichtete Richtungen um die Schwenkachse 216 verschwenkt werden, wobei sie sich mit ihren freien Enden der zu behandelnden Fläche annähern, das heißt die Gestängearme 218, 220 werden nach unten verschwenkt.

Durch eine Änderung des Schaltzustandes der Ventilanordnung 266 können somit die beiden Gestängearme 218, 220 gemeinsam in die erste Schwenkrichtung 348 und in die zweite Schwenkrichtung 350 verschwenkt werden.

Außerdem können die Gestängearme 218, 220 in einander entgegen gerichtete Richtungen nach oben und nach unten verschwenkt werden. Die Federrate kann hierbei unabhängig von der Schwenkstellung der Gestängearme 218, 220 mittels des Druckbegrenzungsventils 294 auf einen vorgegebenen Wert eingestellt werden, und durch Änderung der Schaltstellung des dritten Proportional-Wegeventils 322 kann die Dämpfung der Schwenkbewegung variiert werden. Durch eine Überlagerung der genannten Bewegungen kann auch eine Änderung der Schwenkstellung von wahlweise einem der beiden Gestängearme 218, 220 erzielt werden, wohingegen der andere der beiden Gestängearme 218, 220 seine Schwenkstellung beibehält.

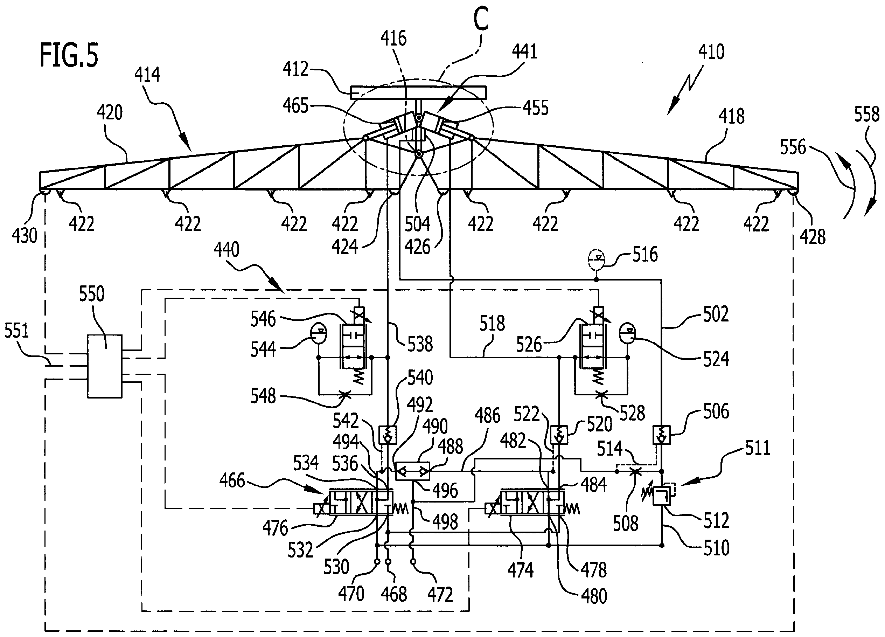

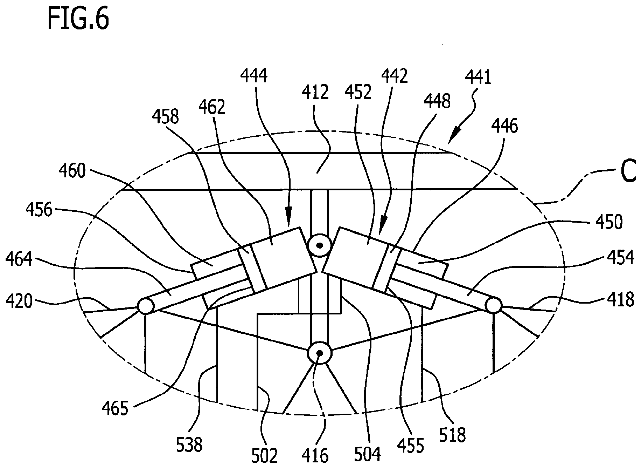

In den Figuren 5 und 6 ist eine dritte vorteilhafte Ausführungsform einer erfindungsgemäßen landwirtschaftlichen Ausbringvorrichtung schematisch dargestellt, die insgesamt mit dem Bezugszeichen 410 belegt ist. Die Ausbringvorrichtung 410 weist ebenso wie die voranstehend unter Bezugnahme auf Figur 2 erläuterte Ausbringvorrichtung 210 einen Träger 412 auf, der an einem in der Zeichnung nicht dargestellten Stützrahmen in vertikaler Richtung verstellbar und federnd gelagert ist.

Am Träger 412 ist ein Ausbringgestänge 414 um eine Schwenkachse 416 verschwenkbar gelagert. Das Ausbringgestänge 414 weist einen ersten Gestängearm 418 und einen zweiten Gestängearm 420 auf, die gelenkig miteinander verbunden sind und um die Schwenkachse 416 verschwenkt werden können. In entsprechender Weise wie bei der voranstehend unter Bezugnahme auf Figur 2 erläuterten Ausführungsform können die beiden Gestängearme 418, 420 gemeinsam in einer ersten Schwenkrichtung und einer der ersten Schwenkrichtung entgegen gerichteten zweiten Schwenkrichtung verschwenkt werden, und sie können relativ zueinander um die Schwenkachse 416 verschwenkt werden.

An den Unterseiten der Gestängearme 418, 420 sind Ausbringorgane 422 angeordnet, beispielsweise Spritzdüsen, mit deren Hilfe flüssige und/oder feste Wirkstoffe, insbesondere Pflanzenschutzmittel oder Düngemittel, auf eine zu behandelnde Fläche ausgebracht werden, beispielsweise auf eine Bodenfläche oder ein Pflanzendach.

An den einander zugewandten und den einander abgewandten Enden der beiden Gestängearme 418, 420 sind Sensoren 424, 426, 428, 430 angeordnet, mit deren Hilfe der Abstand der Gestängearme 418, 420 zu der zu behandelnden Fläche ermittelt werden kann.

Zum Verschwenken des Ausbringgestänges 414 kommt bei der in Figur 5 dargestellten Ausbringvorrichtung 410 eine dritte vorteilhafte Ausführungsform einer Steuereinrichtung zum Einsatz, die insgesamt mit dem Bezugszeichen 440 belegt ist. In entsprechender Weise wie die voranstehend unter Bezugnahme auf Figur 3 erläuterte Steuereinrichtung 240 weist die in Figur 5 dargestellte Steuereinrichtung 440 eine Hydraulikzylinderanordnung 441 auf mit einem ersten Hydraulikzylinder 442 und einem zweiten Hydraulikzylinder 444. Die Hydraulikzylinderanordnung 441 ist in Figur 6 vergrößert dargestellt.

Der erste Hydraulikzylinder 442 weist einen ersten Zylinderkörper 446 auf, in dem ein erster Kolben 448 verschiebbar gelagert ist, der den ersten Zylinderkörper 446 in eine erste Zylinderkammer 450 und eine zweite Zylinderkammer 452 unterteilt. Die erste Zylinderkammer 450 wird von einer ersten Kolbenstange 454 durchgriffen, die am Kolben 448 festgelegt ist und mit ihrem aus der ersten Zylinderkammer 450 herausragenden Ende an den ersten Gestängearm 418 angelenkt ist. Mit seiner der ersten Kolbenstange 454 abgewandten Stirnseite ist der erste Zylinderkörper 446 an den Träger 412 angelenkt. Die der ersten Zylinderkammer 450 zugewandte Seite des ersten Kolbens 448 bildet eine erste Zylinderwirkfläche 455 aus.

Der zweite Hydraulikzylinder 444 ist identisch ausgestaltet wie der erste Hydraulikzylinder 442. Der zweite Hydraulikzylinder 444 weist einen zweiten Zylinderkörper 456 auf, dessen Innenraum von einem verschiebbar im zweiten Zylinderkörper 456 gelagerten zweiten Kolben 458 in eine dritte Zylinderkammer 460 und eine vierte Zylinderkammer 462 unterteilt ist. Die dritte Zylinderkammer 460 wird von einer zweiten Kolbenstange 464 durchgriffen, die am zweiten Kolben 458 festgelegt ist und mit ihrem aus der dritten Zylinderkammer 460 herausragenden Ende an den zweiten Gestängearm 420 angelenkt ist. Mit seiner der zweiten Kolbenstange 464 abgewandten Stirnseite ist der zweite Zylinderkörper 456 an den Träger 412 angelenkt. Die der dritten Zylinderkammer 460 zugewandte Seite des zweiten Kolbens 458 bildet eine zweite Zylinderwirkfläche 465 aus.

Die Steuereinrichtung 440 weist eine Ventilanordnung 466 auf sowie einen Druckversorgungsanschluss 468, einen Rücklaufanschluss 470 und einen Steueranschluss 472. An den Druckversorgungsanschluss 468 ist eine an sich bekannte und deshalb zur Erzielung einer besseren Übersicht in der Zeichnung nicht dargestellte Load-Sensing-Pumpe anschließbar, deren Steuereingang an den Steueranschluss 472 anschließbar ist. An den Rücklaufanschluss 470 ist ein an sich ebenfalls bekannter und deshalb in der Zeichnung nicht dargestellter Vorratstank für Hydraulikflüssigkeit anschließbar. Über den Druckversorgungsanschluss 468 kann der Steuereinrichtung 440 von der Load-Sensing-Pumpe unter Druck gesetzte Hydraulikflüssigkeit zugeführt werden, und über den Rücklaufanschluss 470 kann Hydraulikflüssigkeit von der Steuereinrichtung 440 an den Vorratstank abgegeben werden.

Die Ventilanordnung 466 weist ein erstes elektrisch steuerbares Proportional-Wegeventil 474 und ein zweites elektrisch steuerbares Proportional-Wegeventil 476 auf. Die beiden Wegeventile 474 und 476 sind identisch ausgestaltet in Form von 4/3-Wegeventilen mit drei Schaltstellungen.

Das erste Proportional-Wegeventil 474 umfasst einen ersten Druckanschluss 478, einen ersten Tankanschluss 480 sowie einen ersten Arbeitsanschluss 482 und einen zweiten Arbeitsanschluss 484. Der erste Druckanschluss 478 steht mit dem Druckversorgungsanschluss 468 in Strömungsverbindung, und der erste Tankanschluss 480 steht mit dem Rücklaufanschluss 470 in Strömungsverbindung.

Der erste Arbeitsanschluss 482 ist über eine erste Pumpsteuerleitung 486 an einen ersten Eingang 488 eines Wechselventils 490 angeschlossen. An einen zweiten Eingang 492 des Wechselventils 490 ist eine nachfolgend näher erläuterte zweite Pumpsteuerleitung 494 angeschlossen. Ein Ausgang 496 des Wechselventils 490 steht über eine erste Ausgangsleitung 498 mit dem Steueranschluss 472 der Steuereinrichtung 440 in Strömungsverbindung. An die erste Ausgangsleitung 498 ist eine zweite Ausgangsleitung 502 angeschlossen, über die der Ausgang 496 an eine Verbindungsleitung 504 angeschlossen ist. Über die Verbindungsleitung 504 ist die die zweite Zylinderkammer 452 mit der vierten Zylinderkammer 462 verbunden. Die erste Pumpsteuerleitung 486 und die zweite Pumpsteuerleitung 494 können jeweils mit unter Druck stehender Hydraulikflüssigkeit beaufschlagt werden, und der größere der beiden Drücke kann mit Hilfe des Wechselventils 490 abgegriffen werden zur Steuerung der in der Zeichnung nicht dargestellten Load-Sensing-Pumpe, deren Ausgang an den Druckversorgungsanschluss 468 anschließbar ist.

In die zweite Ausgangsleitung 502 ist ein erstes hydraulisch entsperrbares Rückschlagventil 506 geschaltet, und im Bereich zwischen dem ersten entsperrbaren Rückschlagventil 506 und dem Ausgang 496 des Wechselventils 490 ist in die zweite Ausgangsleitung 502 ein erstes Drosselelement 508 geschaltet.

Im Bereich zwischen dem ersten Drosselelement 508 und dem ersten hydraulisch entsperrbaren Rückschlagventil 506 zweigt von der zweiten Ausgangsleitung 502 eine Druckbegrenzungsleitung 510 ab, in die eine Druckvorgabeeinrichtung 511 geschaltet. Im dargestellten Ausführungsbeispiel weist die Druckvorgabeeinrichtung 511 ein Druckbegrenzungsglied auf in Form eines einstellbaren Druckbegrenzungsventils 512. Über die Druckbegrenzungsleitung 510 ist die zweite Ausgangsleitung 502 mit dem Rücklaufanschluss 470 verbunden. Im dargestellten Ausführungsbeispiel ist das Druckbegrenzungsventil 512 manuell einstellbar. Alternativ kann zum Beispiel ein elektrisch steuerbares Druckbegrenzungsventil zum Einsatz kommen, das an das nachfolgend erläuterte elektrische Regelglied 550 angeschlossen ist.

Das erste hydraulisch entsperrbare Rückschlagventil 506 öffnet in Richtung der Verbindungsleitung 504 und kann über eine erste Ventilsteuerleitung 514 für einen Strom in Gegenrichtung entsperrt werden. Die erste Ventilsteuerleitung 514 zweigt zwischen dem ersten Drosselelement 508 und dem Ausgang 496 des Wechselventils 490 von der zweiten Ausgangsleitung 502 ab.

An die zweite Ausgangsleitung 502 kann im Bereich zwischen dem ersten hydraulisch entsperrbaren Rückschlagventil 506 und der Verbindungsleitung 504 ein in Figur 5 gestrichelt dargestellter optionaler Hydrospeicher 516 angeschlossen sein.

Der zweite Arbeitsanschluss 484 des ersten Proportional-Wegeventils 474 steht über eine erste Arbeitsleitung 518 mit der ersten Zylinderkammer 450 in Strömungsverbindung. In die erste Arbeitsleitung 518 ist ein zweites hydraulisch entsperrbares Rückschlagventil 520 geschaltet, das in Richtung der ersten Zylinderkammer 450 öffnet und über eine zweite Ventilsteuerleitung 522 für einen Strom in Gegenrichtung entsperrt werden kann. Die zweite Ventilsteuerleitung 522 zweigt von der ersten Pumpsteuerleitung 486 ab.

Im Bereich zwischen dem zweiten hydraulisch entsperrbaren Rückschlagventil 520 und der ersten Zylinderkammer 450 ist an die erste Arbeitsleitung 518 ein erster Hydrospeicher 524 angeschlossen. Die Verbindung zwischen der ersten Arbeitsleitung 518 und dem ersten Hydrospeicher 524 erfolgt über ein Verbindungselement mit veränderbarem Strömungsquerschnitt, das im dargestellten Ausführungsbeispiel als drittes elektrisch steuerbares Proportional-Wegeventil 526 ausgeschaltet ist. Das dritte elektrisch steuerbare Proportional-Wegeventil 526 ist als 2/2-Wegeventil ausgestaltet mit zwei Schaltstellungen und mit einem Ventileingang, der an die erste Arbeitsleitung 518 angeschlossen ist, und mit einem Ventilausgang, der an den ersten Hydrospeicher 524 angeschlossen ist. Der Strömungsquerschnitt und damit auch der Strömungswiderstand der Verbindung zwischen der erste Zylinderwirkfläche 455 und dem zweiten Hydrospeicher 524 sind abhängig von der Stellung, die das dritte Proportional-Wegeventil 526 einnimmt. Parallel zum dritten Proportional-Wegeventil 526 ist ein zweites Drosselelement 528 geschaltet. Mit Hilfe des zweiten Drosselelements 528 kann unabhängig von der Schaltstellung des dritten Proportional-Wegeventils 526 eine Strömungsverbindung zwischen der ersten Arbeitsleitung 518 und dem ersten Hydrospeicher 524 aufrechterhalten werden, die für einen permanenten Druckausgleich sorgt und schlagartige Druckänderungen und ruckartige Bewegungen des Ausbringgestänges 414 verhindert.

Das zweite Proportional-Wegeventil 476 weist einen zweiten Druckanschluss 530, einen zweiten Tankanschluss 532 sowie einen dritten Arbeitsanschluss 534 und einen vierten Arbeitsanschluss 536 auf.

Der dritte Arbeitsanschluss 534 steht über die zweite Pumpsteuerleitung 494 mit dem zweiten Eingang 492 des Wechselventils 490 in Strömungsverbindung. Der vierte Arbeitsanschluss 536 steht über eine zweite Arbeitsleitung 538 mit der dritten Zylinderkammer 460 in Strömungsverbindung. In die zweite Arbeitsleitung 538 ist ein drittes hydraulisch entsperrbares Rückschlagventil 540 geschaltet, das in Richtung der dritten Zylinderkammer 460 öffnet und über eine dritte Ventilsteuerleitung 542 für einen Strom in Gegenrichtung entsperrt werden kann. Die dritte Ventilsteuerleitung 542 zweigt von der zweiten Pumpsteuerleitung 494 ab.

Im Bereich zwischen dem dritten hydraulisch entsperrbaren Rückschlagventil 540 und der dritten Zylinderkammer 460 ist an die zweite Arbeitsleitung 538 ein zweiter Hydrospeicher 544 angeschossen. Die Verbindung zwischen der zweiten Arbeitsleitung 538 und dem zweiten Hydrospeicher 544 erfolgt über weiteres Verbindungselement mit veränderbarem Strömungsquerschnitt, das im dargestellten Ausführungsbeispiel als viertes elektrisch steuerbares Proportional-Wegeventil 546 ausgeschaltet ist. Das vierte elektrisch steuerbare Proportional-Wegeventil 546 ist in gleicher Weise wie das voranstehend erläuterte dritte elektrisch steuerbare Proportional-Wegeventil 526 als 2/2-Wegeventil ausgestaltet mit zwei Schaltstellungen. Ein Ventileingang des vierten Proportional-Wegeventils 546 ist an die zweite Arbeitsleitung 538 angeschlossen und ein Ventilausgang des vierten Proportional-Wegeventils 546 ist an den dritten Hydrospeicher 544 angeschlossen. Der Strömungsquerschnitt und damit auch der Strömungswiderstand der Verbindung zwischen der zweiten Zylinderwirkfläche 465 und dem dritten Hydrospeicher 544 sind abhängig von der Stellung, die das vierte Proportional-Wegeventil 546 einnimmt. Parallel zum vierten Proportional-Wegeventil 546 ist ein drittes Drosselelement 548 geschaltet. Mit Hilfe des dritten Drosselelements 548 kann unabhängig von der Schaltstellung des vierten Proportional-Wegeventils 546 eine Strömungsverbindung zwischen der zweiten Arbeitsleitung 538 und dem zweiten Hydrospeicher 544 aufrechterhalten werden, die für einen permanenten Druckausgleich sorgt und schlagartige Druckänderungen und ruckartige Bewegungen des Ausbringgestänges 414 verhindert.

Das erste Proportional-Wegeventil 474 ist ebenso wie das zweite Proportional-Wegeventil 476 und das dritte Proportional-Wegeventil 526 und das vierte Proportional-Wegeventil 546 mittels eines elektrischen Regelgliedes 550 elektrisch steuerbar, an das die Sensoren 428 und 430 angeschlossen sind. Außerdem ist an das Regelglied 550 eine Kommunikationsleitung 551 angeschlossen, zum Beispiel ein CAN-Bus, über die das Regelglied 550 mit einer externen Steuereinrichtung kommunizieren kann. Das Regelglied 550 kann darüber hinaus mit weiteren Sensoren in signalleitender Verbindung stehen, beispielsweise mit Drucksensoren, mit deren Hilfe der Druck in der zweiten Ausgangsleitung 502 und/oder der Druck in mindestens einer der Arbeitsleitungen 518, 538 erfasst werden kann.

Wie bereits erwähnt, umfasst die Ventilanordnung 466 das erste elektrisch steuerbare Proportional-Wegeventil 474 und das zweite elektrisch steuerbare Proportional-Wegeventil 476, die identisch ausgestaltet sind in Form von 4/3-Wegeventilen mit jeweils drei Schaltstellungen. Die Ventilanordnung 466 weist einen ersten Schaltzustand auf, in dem das erste Proportional-Wegeventil 474 ebenso wie das zweite Proportional-Wegeventil 476 eine erste Schaltstellung einnehmen. In der ersten Schaltstellung des ersten Proportional-Wegeventils 474 sind der erste Arbeitsanschluss 482 und der zweite Arbeitsanschluss 484 mit dem Rücklaufanschluss 470 verbunden, und in der ersten Schaltstellung des zweiten Proportional-Wegeventils 476 sind der dritte Arbeitsanschluss 534 und der vierte Arbeitsanschluss 536 mit dem Rücklaufanschluss 470 verbunden. Dies hat zur Folge, dass sämtliche hydraulisch entsperrbaren Rückschlagventile 506, 520 und 540 ihre Sperrstellung einnehmen und sämtliche Zylinderkammern 450, 452, 460 und 462 sowohl vom Druckversorgungsanschluss 468 als auch vom Rücklaufanschluss 470 getrennt sind. Die erste und die dritte Zylinderkammer 450, 460 sind jedoch weiterhin mit dem jeweils zugeordneten ersten beziehungsweise zweiten Hydrospeicher 524, 544 verbunden, wobei der Strömungswiderstand zwischen der ersten Zylinderkammer 450 und dem ersten Hydrospeicher 524 mittels des dritten Proportional-Wegeventils 526 variiert werden kann und wobei der Strömungswiderstand zwischen der dritten Zylinderkammer 460 und dem zweiten Hydrospeicher 544 mittels des vierten Proportional-Wegeventils 546 variiert werden kann.

Im ersten Schaltzustand der Ventilanordnung 466 können die beiden Gestängearme 418, 420 des Ausbringgestänges 414 eine Pendelbewegung um die Schwenkachse 416 ausführen, wobei die Pendelbewegung durch den Einsatz der Hydrospeicher 524 und 544 gefedert wird und die Dämpfung der Pendelbewegung durch Variation der Schaltstellungen des dritten Proportional-Wegeventils 526 und des vierten Proportional-Wegeventils 546 verändert werden kann.

In einem zweiten Schaltzustand der Ventilanordnung 466 nimmt das erste Proportional-Wegeventil 474 eine dritte Schaltstellung ein, in der der erste Arbeitsanschluss 482 und der zweite Arbeitsanschluss 484 mit dem Druckversorgungsanschluss 468 verbunden sind, und das zweite Proportional-Wegeventil 476 nimmt eine zweite Schaltstellung ein, in der der dritte Arbeitsanschluss 534 mit dem Druckversorgungsanschluss 468 und der vierte Arbeitsanschluss 536 mit dem Rücklaufanschluss 470 verbunden ist. Dies hat zur Folge, dass die hydraulisch entsperrbaren Rückschlagventile 506, 520 und 540 entsperren und der ersten Zylinderkammer 450 über die erste Arbeitsleitung 518 Hydraulikflüssigkeit zugeführt werden kann, so dass sich das Volumen der ersten Zylinderkammer 450 vergrößert, und gleichzeitig kann aus der dritten Zylinderkammer 460 Hydraulikflüssigkeit über die zweite Arbeitsleitung 538 zum Rücklaufanschluss 470 strömen, so dass sich das Volumen der dritten Zylinderkammer 460 verringert. Dies hat eine Schwenkbewegung der beiden Gestängearme 418, 420 des Ausbringgestänges 416 um die Schwenkachse 416 in einer ersten Schwenkrichtung zur Folge, die in Figur 3 durch den Pfeil 556 veranschaulicht ist.

In einem dritten Schaltzustand der Ventilanordnung 466 nimmt das erste Proportional-Wegeventil 474 seine zweite Schaltstellung ein, in der der erste Arbeitsanschluss 482 mit dem Druckversorgungsanschluss 468 und der zweite Arbeitsanschluss 484 mit dem Rücklaufanschluss 470 verbunden ist, und das zweite Proportional-Wegeventil 476 nimmt seine dritte Schalstellung ein, in der der dritte Arbeitsanschluss 534 und der vierte Arbeitsanschluss 536 mit dem Druckversorgungsanschluss 468 in Strömungsverbindung stehen. Dies hat zur Folge, dass das zweite hydraulisch entsperrbare Rückschlagventil 520 entsperrt wird, so dass Hydraulikflüssigkeit aus der ersten Zylinderkammer 450 abfließen und zum Rücklaufanschluss 470 gelangen kann, und gleichzeitig kann die dritte Zylinderkammer 460 über die zweite Arbeitsleitung 538 mit Hydraulikflüssigkeit versorgt werden, so dass das Volumen der dritten Zylinderkammer vergrößert und gleichzeitig das Volumen der ersten Zylinderkammer 450 verringert wird. Dies hat eine Schwenkbewegung der beiden Gestängearme 418, 420 des Ausbringgestänges 416 um die Schwenkachse 416 in einer der ersten Schwenkrichtung entgegengesetzten Schwenkrichtung zur Folge, die in Figur 3 durch den Pfeil 558 veranschaulicht ist.

In einem vierten Schaltzustand der Ventilanordnung 466 können sowohl das erste Proportional-Wegeventil 474 als auch das zweite Proportional-Wegeventil 476 ihre dritte Schaltstellung einnehmen, so dass sowohl der ersten Zylinderkammer 450 als auch der dritten Zylinderkammer 460 Hydraulikflüssigkeit zugeführt werden kann. Sobald der in der zweiten Ausgangsleitung 502 herrschende Druck der Hydraulikflüssigkeit einen durch das Druckbegrenzungsventil 512 vorgegebenen Maximalwert überschreitet, gibt das Druckbegrenzungsventil 512 die Strömungsverbindung zum Rücklaufanschluss 470 frei, so dass Hydraulikflüssigkeit aus der zweiten Zylinderkammer 452 und der vierten Zylinderkammer 462 abfließen kann. Dies hat zur Folge, dass die beiden Gestängearme 418, 420 einander entgegengesetzte Schwenkbewegungen ausführen können, wobei sie mit ihren freien Enden einen zunehmenden Abstand zu der zu behandelnden Fläche einnehmen, das heißt die Gestängearme 418, 420 werden nach oben verschwenkt.

Um eine entgegen gerichtete Schwenkbewegung der beiden Gestängearme 418, 420 zu erzielen, kann die Ventilanordnung 466 einen fünften Schaltzustand einnehmen, in dem das erste Proportional-Wegeventil 474 und das zweite Proportional-Wegeventil 476 jeweils ihre zweite Schalstellung einnehmen, so dass die hydraulisch entsperrbaren Rückschlagventile 506, 520 und 540 entsperrt werden. Dies hat zur Folge, dass Hydraulikflüssigkeit aus der ersten Zylinderkammer 450 und der dritten Zylinderkammer 460 abfließen und über das erste Drosselelement 508 und die zweite Ausgangsleitung 502 Hydraulikflüssigkeit der zweiten Zylinderkammer 452 und der vierten Zylinderkammer 462 zugeführt werden kann, wobei das Druckbegrenzungsventil 512 den Druck konstant hält. Dies hat zur Folge, dass die beiden Gestängearme 418, 420 einander entgegengesetzte Schwenkbewegungen ausführen können, wobei sie sich mit ihren freien Enden der zu behandelnden Fläche annähern, das heißt die Gestängearme 418, 420 werden nach unten verschwenkt.

Mittels der Steuereinrichtung 440 können somit die beiden Gestängearme 418, 420 in die erste Schwenkrichtung 556 und in die zweite Schwenkrichtung 558 verschwenkt werden. Außerdem können die Gestängearme 418, 420 in einander entgegen gerichtete Richtungen nach oben und nach unten verschwenkt werden. Die Federrate kann hierbei unabhängig von der Schwenkstellung der Gestängearme 418, 420 mittels des Druckbegrenzungsventils 512 auf einen vorgegebenen Wert eingestellt werden, und durch Änderung der Schaltstellung des dritten Proportional-Wegeventils 526 und des vierten Proportional-Wegeventils 546 kann die Dämpfung der Schwenkbewegung variiert werden. Durch eine Überlagerung der genannten Bewegungen kann auch eine Änderung der Schwenkstellung von wahlweise einem der beiden Gestängearme 418, 420 erzielt werden, wohingegen der andere der beiden Gestängearme 418, 420 seine Schwenkstellung beibehält.

## Patentansprüche

1. Steuereinrichtung für eine landwirtschaftliche Ausbringvorrichtung (10, 210, 410), die ein an einem Träger (12, 212, 412) schwenkbar gelagertes Ausbringgestänge (14, 214, 414) aufweist, an dem Ausbringorgane (22, 222, 422) angeordnet sind zum Ausbringen von flüssigen und/oder festen Wirkstoffen, wobei die Steuereinrichtung (40, 240, 440) einen Druckversorgungsanschluss (62, 268, 468) zum Zuführen von unter Druck stehender Hydraulikflüssigkeit und einen Rücklaufanschluss (64, 270, 470) zum Abgeben von Hydraulikflüssigkeit an einen Vorratstank aufweist, und wobei die Steuereinrichtung (40, 240, 440) eine steuerbare Ventilanordnung (60, 266, 466) und eine mit der Ventilanordnung (60, 266, 466) verbundene Hydraulikzylinderanordnung (41, 241, 441) mit einer ersten Zylinderwirkfläche (51, 255, 455) und einer zweiten Zylinderwirkfläche (52, 265, 465) aufweist, wobei die beiden Zylinderwirkflächen (51, 52, 255, 265, 455, 465) mit Druck beaufschlagbar sind und jeweils mit einem Hydrospeicher (98, 100, 318, 320, 524, 544) verbunden sind, und wobei die Schwenkstellung des Ausbringgestänges (14, 214, 414) durch Änderung des Schaltzustandes der Ventilanordnung (60, 266, 466) veränderbar ist, **dadurch gekennzeichnet, dass** die Zylinderwirkflächen (51, 52, 255, 265, 455, 465) unabhängig von der Schwenkstellung des Ausbringgestänges (14, 214, 414) mit einem vorgebbaren Druck beaufschlagbar sind.

2. Steuereinrichtung nach Anspruch 1, **dadurch gekennzeichnet, dass** die Steuereinrichtung eine Druckregeleinrichtung und/oder eine Druckvorgabeeinrichtung (86, 293, 511) aufweist.

3. Steuereinrichtung nach Anspruch 2, **dadurch gekennzeichnet, dass** die Druckvorgabeeinrichtung (86, 293, 511) ein Druckbegrenzungsglied (87, 294, 512) aufweist, das mit dem Rücklaufanschluss (64, 270, 470) verbunden ist.

4. Steuereinrichtung nach einem der voranstehenden Ansprüche, **dadurch gekennzeichnet, dass** zumindest eine Zylinderwirkfläche (52, 265, 455, 465) über ein Verbindungselement mit veränderbarem Strömungsquerschnitt mit dem zugeordneten Hydrospeicher (100, 320, 524, 544) verbunden ist, wobei das Verbindungselement vorzugsweise ein steuerbares Proportional-Wegeventil (102, 322, 526, 546) aufweist.

5. Steuereinrichtung nach Anspruch 4, **dadurch gekennzeichnet, dass** ein Drosselelement (104, 324, 528, 548) parallel zum Verbindungselement geschaltet ist.

6. Steuereinrichtung nach einem der voranstehenden Ansprüche, **dadurch gekennzeichnet, dass** die Ventilanordnung (60, 266, 466) einen ersten Schaltzustand aufweist, in dem die beiden Zylinderwirkflächen (51, 52, 255, 265, 455, 465) vom Druckversorgungsanschluss (62, 268, 468) und vom Rücklaufanschluss (64, 270, 470) getrennt sind, sowie einen zweiten Schaltzustand, in dem eine der beiden Zylinderwirkflächen (51, 255, 455) mit dem Druckversorgungsanschluss (62, 268, 468) und die andere Zylinderwirkfläche (52, 265, 465) mit dem Rücklaufanschluss (64, 270, 470) verbunden ist, sowie einen dritten Schaltzustand, in dem beide Zylinderwirkflächen (51, 52, 255, 265, 455, 465) mit dem Druckversorgungsanschluss (62, 268, 468) verbunden sind.

7. Steuereinrichtung nach einem der voranstehenden Ansprüche, **dadurch gekennzeichnet, dass** die Ventilanordnung (60, 266, 466) zumindest ein elektrisch steuerbares Proportional-Wegeventil (68, 274, 276, 474, 476) aufweist.

8. Steuereinrichtung nach Anspruch 7, **dadurch gekennzeichnet, dass** das mindestens eine elektrisch steuerbare Proportional-Wegeventil (68, 274, 276, 474, 476) drei Schaltstellungen aufweist sowie einen mit dem Druckversorgungsanschluss (62, 268, 468) verbundenen Druckanschluss (70, 278, 326, 478, 530), einen mit dem Rücklaufanschluss (64, 270, 470) verbundenen Tankanschluss (72, 280, 328, 480, 532) und zwei Arbeitsanschlüsse (74, 76, 282, 284, 330, 332, 482, 484, 534, 536).

9. Steuereinrichtung nach Anspruch 7 oder 8, **dadurch gekennzeichnet, dass** die Ventilanordnung (60) ein einziges elektrisch steuerbares Proportional-Wegeventil (68) aufweist oder die Ventilanordnung (266, 466) ein erstes und ein zweites elektrisch steuerbares Proportional-Wegeventil (274, 276, 474, 476) aufweist.

10. Steuereinrichtung nach Anspruch 9, **dadurch gekennzeichnet, dass** die erste Zylinderwirkfläche (455) über das erste elektrisch steuerbare Proportionalventil (474) und die zweite Zylinderwirkfläche (465) über das zweite elektrisch steuerbare Proportionalventil (476) mit dem Druckversorgungsanschluss (468) und dem Rücklaufanschluss (470) verbindbar ist.

11. Steuereinrichtung nach einem der voranstehenden Ansprüche, **dadurch gekennzeichnet, dass** das Ausbringgestänge (14) einen ersten Gestängearm (18) und einen zweiten Gestängearm (20) aufweist, die starr mit einander verbunden und an einem Träger (12) verschwenkbar gelagert sind, und dass die Hydraulikzylinderanordnung (41) einen einzigen Hydraulikzylinder (42) aufweist, der mit einem ersten Ende an den Träger (12) und mit einem zweiten Ende an das Ausbringgestänge (14) angelenkt ist, wobei der Hydraulikzylinder (42) einen Zylinderkörper (44) aufweist, dessen Innenraum von einem Kolben (46) in eine erste Zylinderkammer (48) und eine zweite Zylinderkammer (50) unterteilt wird, wobei die der ersten Zylinderkammer (48) zugewandte Fläche des Kolbens (46) die erste Zylinderwirkfläche (51) ausbildet und wobei die der zweiten Zylinderkammer (50) zugewandte Fläche des Kolbens (46) die zweite Zylinderwirkfläche (52) ausbildet.

12. Steuereinrichtung nach Anspruch 11 in Verbindung mit Anspruch 2, **dadurch gekennzeichnet, dass** die erste Zylinderkammer (48) mit der Druckregeleinrichtung oder Druckvorgabeeinrichtung (86) verbunden ist.

13. Steuereinrichtung nach einem der Ansprüche 1 bis 10, **dadurch gekennzeichnet, dass** das Ausbringgestänge (214, 414) einen ersten Gestängearm (218, 418) und einen zweiten Gestängearm (220, 420) aufweist, die gelenkig miteinander verbunden und an einem Träger (212, 412) verschwenkbar gelagert sind, und dass die Hydraulikzylinderanordnung (241, 441) einen ersten Hydraulikzylinder (242, 442) und einen zweiten Hydraulikzylinder (244, 444) aufweist, wobei der erste Hydraulikzylinder (242, 442) mit einem ersten Ende an den ersten Gestängearm (218, 418) und mit einem zweiten Ende an den Träger (212, 412) angelenkt ist und einen ersten Zylinderkörper (246, 446) aufweist, dessen Innenraum von einem ersten Kolben (248, 448) in eine ersten Zylinderkammer (250, 450) und eine zweite Zylinderkammer (252, 452) unterteilt wird, wobei die der ersten Zylinderkammer (250, 450) zugewandte Seite des ersten Kolbens (248, 448) die erste Zylinderwirkfläche (255, 455) ausbildet, und wobei der zweite Hydraulikzylinder (244, 444) mit einem ersten Ende an den zweiten Gestängearm (220, 420) und mit einem zweiten Ende an den Träger (212, 412) angelenkt ist und einen zweiten Zylinderkörper (256, 456) aufweist, dessen Innenraum von einem zweiten Kolben (258, 458) in eine dritte Zylinderkammer (260, 460) und eine vierte Zylinderkammer (262, 462) unterteilt wird, wobei die der dritten Zylinderkammer (260, 460) zugewandte Seite des zweiten Kolbens (258, 458) die zweite Zylinderwirkfläche (265, 465) ausbildet, und wobei die zweite Zylinderkammer (252, 452) mit der vierten Zylinderkammer (262, 462) in Strömungsverbindung steht.

14. Steuereinrichtung nach Anspruch 13 in Verbindung mit Anspruch 2, **dadurch gekennzeichnet, dass** zumindest eine der Zylinderkammern mit der Druckregeleinrichtung oder Druckvorgabeeinrichtung (293, 511) verbunden ist.

15. Steuereinrichtung nach Anspruch 13 oder 14, **dadurch gekennzeichnet, dass** die beiden Gestängearme (218, 220, 418, 420) relativ zueinander verschwenkbar sind.

16. Landwirtschaftliche Ausbringvorrichtung mit einem an einem Träger (12, 212, 412) schwenkbar lagerbaren Ausbringgestänge (14, 214, 414), an dem Ausbringorgane (22, 222, 422) angeordnet sind zum Ausbringen von flüssigen und/oder festen Wirkstoffen, und mit einer Steuereinrichtung (40, 240, 440) nach einem der voranstehenden Ansprüche.

## Claims

1. A control device for an agricultural application device (10, 210, 410), which has an application boom (14, 214, 414) pivotally mounted on a carrier (12, 212, 412), on which application components (22, 222, 422) are arranged for applying liquid and/or solid active substances, wherein the control device (40, 240, 440) has a pressure supply connection (62, 268, 468) for supplying pressurized hydraulic fluid and a return connection (64, 270, 470) for dispensing hydraulic fluid to a storage tank, and wherein the control device (40, 240, 440) has a controllable valve arrangement (60, 266, 466) and a hydraulic cylinder arrangement (41, 241, 441), which is connected to the valve arrangement (60, 266, 466) and has a first cylinder effective area (51, 255, 455) and a second cylinder effective area (52, 265, 465), wherein the two cylinder effective areas (51, 52, 255, 265, 455, 465) can be pressurized and each are connected to a hydraulic accumulator (98, 100, 318, 320, 524, 544), and wherein the pivot position of the application boom (14, 214, 414) can be varied by changing the switching state of the valve arrangement (60, 266, 466), **characterized in that** the cylinder effective areas (51, 52, 255, 265, 455, 465) are pressurized with a predeterminable pressure independently of the pivot position of the application boom (14, 214, 414).

2. The control device according to claim 1, **characterized in that** the control device has a pressure control device and/or a pressure setting device (86, 293, 511) .

3. The control device according to claim 2, **characterized in that** the pressure setting device (86, 293, 511) has a pressure limiting element (87, 294, 512), which is connected to the return connection (64, 270, 470).

4. The control device according to one of the preceding claims, **characterized in that** at least one cylinder effective area (52, 265, 455, 465) is connected to the associated hydraulic accumulator (100, 320, 524, 544) via a connecting element having variable flow cross-section, wherein the connecting element preferably has a controllable proportional direction control valve (102, 322, 526, 546).

5. The control device according to claim 4, **characterized in that** a throttle element (104, 324, 528, 548) is connected in parallel to the connecting element.

6. The control device according to one of the preceding claims, **characterized in that** the valve arrangement (60, 266, 466) has a first switching state, in which the two cylinder effective areas (51, 52, 255, 265, 455, 465) are separated from the pressure supply connection (62, 268, 468) and the return connection (64, 270, 470) , and a second switching state, in which one of the two cylinder effective areas (51, 255, 455) is connected to the pressure supply connection (62, 268, 468) and the other cylinder effective area (52, 265, 465) is connected to the return connection (64, 270, 470), and a third switching state, in which both cylinder effective areas (51, 52, 255, 265, 455, 465) are connected to the pressure supply connection (62, 268, 468).

7. The control device according to one of the preceding claims, **characterized in that** the valve arrangement (60, 266, 466) has at least one electrically controllable proportional direction control valve (68, 274, 276, 474, 476).

8. The control device according to claim 7, **characterized in that** the at least one electrically controllable proportional direction control valve (68, 274, 276, 474, 476) has three switching positions and a pressure connection (70, 278, 326, 478, 530) connected to the pressure supply connection (62, 268, 468), a tank connection (72, 280, 328, 480, 532) connected to the return connection (64, 270, 470) and two working connections (74, 76, 282, 284, 330, 332, 482, 484, 534, 536).

9. The control device according to claim 7 or 8, **characterized in that** the valve arrangement (60) has a single electrically controllable proportional direction control valve (68) or the valve arrangement (266, 466) has a first and a second electrically controllable proportional direction control valve (274, 276, 474, 476).

10. The control device according to claim 9, **characterized in that** the first cylinder effective area (455) is connectable to the pressure supply connection (468) and the return connection (470) via the first electrically controllable proportional valve (474) and the second cylinder effective area (465) is connectable to the pressure supply connection (468) and the return connection (470) via the second electrically controllable proportional valve (476).

11. The control device according to one of the preceding claims, **characterized in that** the application boom (14) has a first boom arm (18) and a second boom arm (20) which are rigidly connected to each other and pivotally mounted on a carrier (12), and that the hydraulic cylinder arrangement (41) has a single hydraulic cylinder (42) which is hinged with a first end to the carrier (12) and is hinged with a second end to the application boom (14), wherein the hydraulic cylinder (42) has a cylinder body (44) whose interior is divided into a first cylinder chamber (48) and a second cylinder chamber (50) by a piston (46), wherein the surface of the piston (46) facing the first cylinder chamber (48) forms the first cylinder effective area (51) and wherein the surface of the piston (46) facing the second cylinder chamber (50) forms the second cylinder effective area (52).

12. The control device according to claim 11 in conjunction with claim 2, **characterized in that** the first cylinder chamber (48) is connected to the pressure control device or pressure setting device (86) .

13. The control device according to one of claims 1 to 10, **characterized in that** the application boom (214, 414) has a first boom arm (218, 418) and a second boom arm (220, 420), which are connected hinged to each other and are pivotally mounted to a carrier (212, 412), and that the hydraulic cylinder arrangement (241, 441) has a first hydraulic cylinder (242, 442) and a second hydraulic cylinder (244, 444), wherein the first hydraulic cylinder (242, 442) is hinged with a first end to the first boom arm (218, 418) and is hinged with a second end to the carrier (212, 412) and has a first cylinder body (246, 446), whose interior is divided into a first cylinder chamber (250, 450) and a second cylinder chamber (252, 452) by a first piston (248, 448), wherein the side of the first piston (248, 448) facing the first cylinder chamber (250, 450) forms the first cylinder effective area (255, 455), and wherein the second hydraulic cylinder (244, 444) is connected hinged with a first end to the second boom arm (220, 420) and is hinged with a second end to the carrier (212, 412) and has a second cylinder body (256, 456), whose interior is divided into a third cylinder chamber (260, 460) and a fourth cylinder chamber (262, 462) by a second piston (258, 458), wherein the side of the second piston (258, 458) facing the third cylinder chamber (260, 460) forms the second cylinder effective area (265, 465), and wherein the second cylinder chamber (252, 452) is in flow connection with the fourth cylinder chamber (262, 462) .

14. The control device according to claim 13 in conjunction with claim 2, **characterized in that** at least one of the cylinder chambers is connected to the pressure control device or pressure setting device (293, 511).

15. The control device according to claim 13 or 14, **characterized in that** the two boom arms (218, 220, 418, 420) are pivotable relative to each other.

16. An agricultural application device having an application boom (14, 214, 414) pivotally mounted on a carrier (12, 212, 412), on which application components (22, 222, 422) are arranged for the application of liquid and/or solid active substances, and having a control device (40, 240, 440) according to one of the preceding claims.

## Revendications

1. Dispositif de commande pour un système d'épandage agricole (10, 210, 410), qui comporte une tringlerie d'épandage (14, 214, 414) logée pouvant pivoter sur un support (12, 212, 412), sur laquelle sont disposés des organes d'épandage (22, 222, 422) pour épandre des matières liquides et/ou solides, sachant que le dispositif de commande (40, 240, 440) comporte un raccord d'alimentation de pression (62, 268, 468) pour amener du liquide hydraulique sous pression et un raccord de retour (64, 270, 470) pour délivrer du liquide hydraulique à un réservoir de stockage et sachant que le dispositif de commande (40, 240, 440) comporte un système de soupape pilotable (60, 266, 466) et un système de vérins hydrauliques (41, 241, 441) relié au système de soupapes (60, 266, 466) avec une première surface active de vérin (51, 255, 455) et une deuxième surface active de vérin (52, 265, 465), sachant que les deux surfaces actives de vérin (51, 52, 255, 265, 455, 465 ) peuvent être sollicitées par une pression et sont respectivement reliées à un accumulateur hydraulique (98, 100, 318, 320, 524, 544) et sachant que la position de pivotement de la tringlerie d'épandage (14, 214, 414) peut être modifiée en changeant l'état opérationnel du système de soupape (60, 266, 466), **caractérisé en ce que** les surfaces actives de vérin (51, 52, 255, 265, 455, 465) peuvent être sollicitées par une pression prédéfinissable indépendamment de la position de pivotement de la tringlerie d'épandage (14, 214, 414).

2. Dispositif de commande selon la revendication 1, **caractérisé en ce que** le dispositif de commande comporte un dispositif de régulation de pression et/ou un dispositif d'attribution de pression (86, 293, 511).

3. Dispositif de commande selon la revendication 2, **caractérisé en ce que** le dispositif d'attribution de pression (86, 293, 511) comporte un organe de limitation de pression (87, 294, 512), qui est relié au raccord de retour (64, 270, 470).

4. Dispositif de commande selon l'une quelconque des revendications précédentes, **caractérisé en ce qu'** au moins une surface active de vérin (52, 265, 455, 465) est relié par un élément de liaison avec une section d'écoulement modifiable à l'accumulateur hydraulique attribué (100, 320, 524, 544), sachant que l'élément de liaison comporte de préférence un distributeur de commande proportionnel (102, 322, 526, 546).

5. Dispositif de commande selon la revendication 4, **caractérisé en ce qu'**un élément d'étranglement (104, 324, 528, 548) est monté parallèlement à l'élément de liaison.

6. Dispositif de commande selon l'une quelconque des revendications précédentes, **caractérisé en ce que** le système de soupapes (60, 266, 466) comporte un premier état opérationnel dans lequel les deux surfaces actives de vérin (51, 52, 255, 265, 455, 465) sont séparées du raccord d'alimentation de pression (62, 268, 468) et du raccord de retour (64, 270, 470), ainsi qu'un deuxième état opérationnel dans lequel une des deux surfaces actives de vérin (51, 255, 455) est reliée au raccord d'alimentation de pression (62, 268, 468) et l'autre surface active de vérin (52, 265, 465) au raccord de retour (64, 270, 470), ainsi qu'un troisième état opérationnel dans lequel les deux surfaces actives de vérin (51, 52, 255, 265, 455, 465) sont reliées au raccord d'alimentation de pression (62, 268, 468).

7. Dispositif de commande selon l'une quelconque des revendications précédentes, **caractérisé en ce que** le système de soupapes (60, 266, 466) comporte au moins un distributeur de commande proportionnel (68, 274, 276, 474, 476) à commande électrique.

8. Dispositif de commande selon la revendication 7, **caractérisé en ce qu'**au moins un distributeur de commande proportionnel à commande électrique (68, 274, 276, 474, 476) comporte trois positions de fonctionnement, ainsi qu'un raccord de pression (70, 278, 326, 478, 530) relié au raccord d'alimentation de pression (62, 268, 468), un raccord de réservoir (72, 280, 328, 480, 532) relié au raccord de retour (64, 270, 470) et deux raccords fonctionnels (74, 76, 282, 284, 330, 332, 482, 484, 534, 536).

9. Dispositif de commande selon la revendication 7 ou 8, **caractérisé en ce que** le système de soupapes (60) comporte un distributeur de commande proportionnel à commande électrique unique (68) ou le système de soupapes (266, 466) comporte un premier et un deuxième distributeur de commande proportionnel à commande électrique (274, 276, 474, 476).

10. Dispositif de commande selon la revendication 9, **caractérisé en ce que** la première surface active de vérin (455) est reliée par le biais du premier distributeur de commande proportionnel à commande électrique (474) et la deuxième surface active de vérin (465) par le biais du deuxième distributeur de commande proportionnel à commande électrique (476) au raccord d'alimentation de pression (468) et au raccord de retour (470) .

11. Dispositif de commande selon l'une quelconque des revendications précédentes, **caractérisé en ce que** la tringlerie d'épandage (14) comporte un premier bras de tringlerie (18) et un deuxième bras de tringlerie (20), qui sont reliés fermement l'un à l'autre et sont logés pouvant pivoter sur un support (12) et **en ce que** le système de vérin hydraulique (41) comporte un vérin hydraulique (42) unique qui est relié en articulation avec une première extrémité au support (12) et avec une deuxième extrémité à la tringlerie d'épandage (14), sachant que le vérin hydraulique (42) comporte un corps de vérin (44), dont l'intérieur est divisé par un piston (46) en une première chambre de vérin (48) et une deuxième chambre de vérin (50), sachant que la surface du piston (46) tournée vers la première chambre de vérin (48) constitue la première surface active de vérin (51) et sachant que la surface du piston (46) tournée vers la deuxième chambre de vérin (50) constitue la deuxième surface active de vérin (52).

12. Dispositif de commande selon la revendication 11 en liaison avec la revendication 2, **caractérisé en ce que** la première chambre de vérin (48) est reliée au dispositif de régulation de pression ou au dispositif d'attribution de pression (86).

13. Dispositif de commande selon l'une quelconque des revendications 1 à 10, **caractérisé en ce que** la tringlerie d'épandage (214, 414) comporte un premier bras de tringlerie (218, 418) et un deuxième bras de tringlerie (220, 420), qui sont reliés l'un à l'autre de façon articulée et sont logés pouvant pivoter sur un support (212, 412) et **en ce que** le système de vérins hydrauliques (241, 441) comporte un premier vérin hydraulique (242, 442) et un deuxième vérin hydraulique (244, 444), sachant que le premier vérin hydraulique (242, 442) est relié en articulation avec une première extrémité au premier bras de tringlerie (218, 418) et avec une deuxième extrémité au support (212, 412) et comporte un premier corps de vérin (246, 446), dont l'intérieur est divisé par un premier piston (248, 448) en une première chambre de vérin (250, 450) et une deuxième chambre de vérin (252, 452), sachant que le côté du premier piston (248, 448) tourné vers la première chambre de vérin (250, 450) constitue la première surface active de vérin (255, 455) et sachant que le deuxième vérin hydraulique (244, 444) est relié de façon articulée avec une première extrémité au deuxième bras de tringlerie (220, 420) et avec une deuxième extrémité au support (212, 412) et comporte un deuxième corps de vérin (256, 456), dont l'intérieur est divisé par un deuxième piston (258, 458) en une troisième chambre de vérin (260, 460) et une quatrième chambre de vérin (262, 462), sachant que le côté du deuxième piston (258, 458) tourné vers la troisième chambre de vérin (260, 460) constitue la deuxième surface active de vérin (265, 465) et sachant que la deuxième chambre de vérin (252, 452) est en liaison d'écoulement avec la quatrième chambre de vérin (262, 462) .

14. Dispositif de commande selon la revendication 13 en liaison avec la revendication 2, **caractérisé en ce qu'**au moins une des chambres de vérin est reliée au dispositif de régulation de pression ou au dispositif d'attribution de pression (293, 511).

15. Dispositif de commande selon la revendication 13 ou 14, **caractérisé en ce que** les deux bras de tringlerie (218, 220, 418, 420) peuvent pivoter l'un par rapport à l'autre.

16. Système d'épandage agricole avec une tringlerie d'épandage (14, 214, 414) logeable pouvant pivoter sur un support (12, 212, 412) sur laquelle sont disposés des organes d'épandage (22, 222, 422) pour épandre des matières liquides et/ou solides et avec un dispositif de commande (40, 240, 440) selon l'une quelconque des revendications précédentes.
